# EUROPÄISCHE PATENTSCHRIFT

(11) **EP 2 501 540 B1**
(45) Veröffentlichungstag und Bekanntmachung des Hinweises auf die Patenterteilung: **01.07.2015**
(21) Anmeldenummer: 10722906.4
(22) Anmeldetag: 04.05.2010
(51) Int. Cl.: B31F 1/07

(54) **VERFAHREN ZUM PRÄGEN EINES MUNDSTÜCKBELAGS EINES ZIGARETTENMUNDSTÜCKES**
METHOD FOR EMBOSSING A TIP COVER OF A CIGARETTE TIP
PROCEDE DE GAUFRAGE D'UN REVETEMENT DE BOUT DE CIGARETTE

(30) Priorität: 17.11.2009 AT 18182009
(43) Veröffentlichungstag der Anmeldung: 26.09.2012
(73) Patentinhaber: Tannpapier GmbH, 4050 Traun (AT)
(72) Erfinder: GRIESMAYR, Günter, 4600 Wels (AT)
(74) Vertreter: Burger, Hannes
(86) Internationale Anmeldenummer: PCT/AT2010/000144
(87) Internationale Veröffentlichungsnummer: WO 2011/060459

(56) Entgegenhaltungen:
- WO-A1-2007/107167
- JP-A- 2010 111 003

## Beschreibung

Die Erfindung betrifft eine Vorrichtung zum Einprägen eines vorgebbaren Musters in zumindest ein flächiges, zwischen zumindest zwei Prägewalzen der Vorrichtung durchgeführtes Material, wobei die Bewegungen der Prägewalzen miteinander synchronisiert sind, und die Prägewalzen weiters zumindest zwei Prägspuren aufweisen.

Weiters betrifft die Erfindung eine Vorrichtung zum Einprägen eines vorgebbaren Musters in ein flächiges, zwischen zumindest zwei Prägewalzen der Vorrichtung durchgeführtes Material, wobei die Bewegungen der Prägewalzen miteinander synchronisiert sind, und die Prägewalzen eine Prägspur aufweisen.

Weiters betrifft die Erfindung ein Verfahren zum Prägen eines Mundstückbelags eines Zigarettenmundstückes.

Darüber hinaus betrifft die Erfindung eine Prägewalze, wobei die Prägewalze durch erhabene, insbesondere pyramidenstumpförmige, Stellen gebildete Prägestrukturen aufweist, die an zumindest einem ersten und an zumindest einem zweiten radial umlaufenden Oberflächenabschnitt angeordnet sind.

Unter dem Begriff "Mundstückbelag" wird in diesem Dokument ein "Mundstückbelagpapier" verstanden, jedoch soll durch die Verwendung des Begriffes "Mundstückbelag" zum Ausdruck gebracht werden, dass es sich bei den verwendeten Material nicht immer um ein Papier handeln muss, so kann das "Mundstückbelagpapier" aus jedem anderen geeigneten Material beispielsweise aus einer Kunststofffolie, aus Cellophan etc. hergestellt sein.

Unter dem Begriff "Prägespur" wird in diesem Dokument jener Oberflächenabschnitt einer Mantelfläche eines Prägezylinders verstanden, mit welchem eine Bahn eines Materials geprägt werden kann. Mit einem einspurigen Prägezylinder kann eine einzige Bahn geprägt werden, während mit einem zweispurigen Prägezylinder zwei nebeneinander laufende Materialbahnen gleichzeitig geprägt werden können. Ein einspuriger Prägezylinder kann sich somit hinsichtlich seiner Breite und der Anzahl und Anordnung von Prägestrukturen, mit welchen ein Muster auf die Materialbahn eingeprägt wird, unterscheiden.
Eine Vorrichtung der eingangs genannten Art ist beispielsweise aus der WO 08/122589 bekannt geworden. Bei der bekannten Vorrichtung werden zwei starr in einem Rahmen gehaltene Prägewalzen über seitlich an den Prägewalzen angeordnete Zahnräder synchronisiert. Nachteilig bei der bekannten Ausführungsform ist vor allem, dass durch die verwendete Art der Synchronisierung der Walzenbewegungen bauartbedingt ein fester Abstand zwischen den Walzen erforderlich ist, wodurch es bei variierender Dicke des zwischen den Walzen durchgeführten Materials zu Problemen bei dem Prägevorgang kommen kann.

Es ist daher eine Aufgabe der Erfindung, die Prägewalzen derart zu synchronisieren, dass ein zuverlässiges Prägen auch bei variierender Dicke des zu prägenden Materials ermöglicht ist.

Diese Aufgabe wird mit einer Vorrichtung nach Anspruch 1 und einem Verfahren nach Anspruch 30.

Die erfindungsgemäße Lösung ermöglicht es, Variationen der Dicke des zwischen den Prägewalzen durchgeführten Materials ausgleichen zu können und gleichzeitig eine Synchronisation der Bewegungen der Prägewalzen aufrecht zu erhalten.

Gemäß einer bevorzugten Variante der Erfindung können die Synchronisationsmittel der zumindest zwei Prägewalzen über die Mantelflächen der Prägewalzen verteilte erhabene Stellen sein, wobei die Mantelflächen der Prägewalzen im Bereich der Synchronisationsmittel zueinander kongruent ausgebildet und die erhabenen Stellen von zumindest eines ersten radial umlaufende Oberflächenabschnittes gegenüber den erhabenen Stellen zumindest eines zweiten Oberflächenabschnittes derselben Prägewalze versetzt angeordnet sein können. Diese Variante der Erfindung hat den Vorteil, dass durch die versetzte Anordnung der Synchronisationsmittel zueinander gewährleistet werden kann, dass unabhängig von der Relativlage der Walzen zueinander stets eine Anzahl von Synchronisationsmittel einer ersten Prägewalze mit einer Anzahl von Synchronisationsmitteln einer zweiten Prägewalze in vollem Eingriff stehen und somit eine sehr zuverlässige Synchronisation der Walzen erzielt werden kann.

Eine vorteilhafte Ausführungsform der Erfindung sieht vor, dass die erhabenen Stellen des ersten Oberflächenabschnittes und des zweiten Oberflächenabschnittes je in Reihen angeordnet sind, die Reihen des ersten und des zweiten Oberflächenabschnittes versetzt zueinander sind, wobei in Blickrichtung einer zur Längsachse parallelen Richtung zwischen zwei Reihen des ersten Oberflächenabschnittes jeweils eine Reihe des zweiten Oberflächenabschnittes zu liegen kommt. Hierdurch lässt sich gewährleisten, dass ein Teil der Synchronisationsmittel der Prägewalzen genau dann in einem vollen Eingriff miteinander steht, wenn der Eingriff zwischen einem anderen Teil der Synchronisationsmittel minimal ist. Daher ist in allen Stellungen der Walzen zueinander die Synchronisation der Walzenbewegungen miteinander gewährleistet.

Ein sehr guter Eingriff der Synchronisationsmittel der beiden Walzen ineinander lässt sich dadurch gewährleisten, dass die erhabenen Stellen als Zähne ausgebildet sind.

Ein wechselseitiger Eingriff der Zähne ineinander kann dadurch optimiert werden, dass die Zähne pyramidenstumpfförmig ausgebildet sind.

Eine Variante der Erfindung, die sich durch eine vereinfachte Herstellbarkeit auszeichnet, sieht vor, dass die unterschiedlichen Prägespuren zugeordneten Synchronisationsmittel einer Prägewalze gleichartig ausgebildet sind.

Eine gute Synchronisation kann beispielsweise dadurch erzielt werden, dass Synchronisationsmittel auf den Oberflächen der Prägewalzen in zueinander parallelen Reihen angeordnet sind.

Um ein Logo aufzubringen, kann mindestens eine erste der Prägewalzen zumindest eine Präge- / Perforationsstruktur, insbesondere zum Aufprägen bzw. Perforieren zumindest eines Bildes oder zumindest eines Schriftzeichens, aufweisen und mindestens eine zweite der Prägewalzen an der der Prägestruktur entsprechenden Stelle mit einer Gegendruckfläche versehen sein.

Um ein zuverlässiges Aufbringen von Bild oder Schriftzeichen, beispielsweise eines Logos, zu gewährleisten, kann die Prägestruktur auf einer dazu geeigneten, geglätteten Oberflächenschicht aufgebracht sein.

In Hinblick auf die Verwendung von Material variierender Dicke ist es weiters von Vorteil, wenn die zumindest zwei Prägewalzen nachgiebig gegeneinander anpressbar sind.

Zur Überwachung der Walzenbewegungen kann die Vorrichtung Sensoren zur Erfassung einer Relativposition der Prägewalzen zueinander aufweisen.

Gemäß einer vorteilhaften Variante der Erfindung können die Sensoren als Drehwinkelsensoren ausgeführt sein. Die Verwendung von Drehwinkelsensoren ermöglicht ein rasches und zuverlässiges Bestimmen einer Relativwinkelerfassung zwischen den rotierenden Prägewalzen.

Gemäß einer bevorzugten Ausführungsform der Erfindung kann eine der Prägewalzen von einem Motor und die zweite Prägewalze über die auf den Prägeflächen angeordneten und ineinander greifenden Synchronisationsmittel antreibbar sein.

Gemäß einer anderen Variante der Erfindung, welche sich durch einen einfachen Aufbau auszeichnet, da hierbei an den Oberflächen der Prägewalzen nicht zwingendermaßen Synchronisationsmittel vorgesehen sein müssen, kann jede Prägewalze von einem eigenen Motor angetrieben sein.

Vorteilhafterweise kann die Vorrichtung bei der in dem letzten Absatz genannten Ausführungsform der Erfindung eine mit den Sensoren und den Motoren der Prägewalzen verbundene Steuerung aufweisen, welche dazu eingerichtet ist, anhand von den Sensoren an sie übermittelten Daten die Drehzahl der Prägewalzen zum Ausgleich einer Differenz zwischen einer Sollrelativlage und einer gemessenen Relativlage zu verändern.

Eine weitere vorteilhafte Variante, die sich durch einen einfachen Aufbau auszeichnet, sieht vor, dass die Vorrichtung einen Elektromotor aufweist, der gleichzeitig je eine Antriebswelle für je eine Prägewalze mit der gleichen Drehzahl antreibt, wobei die Prägewalzen parallel zueinander angeordnet sind.

Eine einfache Synchronisation der Bewegungen der beiden Prägewalzen lässt sich dadurch erzielen, dass auf einer ersten der Antriebswellen eine erste der Prägewalzen angeordnet ist und die zweite Antriebswelle über zumindest ein Kraftkopplungsglied eine zur ersten Antriebswelle parallele Welle antreibt, auf welcher eine zweite der Prägewalzen angeordnet ist.

Eine weitere bauliche Vereinfachung und eine zuverlässige Synchronisation der Prägewalzen lassen sich dadurch erzielen, dass die erste und die zweite Antriebswelle einstückig miteinander ausgebildet sind.

Thermoplastische Verformungen des zu prägenden Materials lassen sich dadurch erzielen, dass die Vorrichtung eine auf das zu prägende Material wirkende Strahlungs- und/oder Wärmequelle aufweist.

Um eine genaue Positionierung der zu prägenden Struktur auf dem Material zu ermöglichen, kann die Vorrichtung eine den Prägewalzen nachgeschaltete optische Messvorrichtung zur Erfassung der Position eines mit der Präge- / Perforationsstruktur erzeugten Musters auf dem zu prägenden Material aufweisen.

Gemäß einer Variante der Erfindung, die sich durch eine hohe Zuverlässigkeit auszeichnet, kann die optische Messvorrichtung eine Bilderkennungseinheit sein.

Weiters kann die Vorrichtung dazu eingerichtet sein, eine Abweichung zwischen einer erfassten Position und einer Sollposition des erzeugten Musters auszugleichen.

Eine weitere vorteilhafte Variante der Erfindung, welche ein exaktes Prägen in Abstimmung zu einem auf dem Material aufgebrachten Aufdruck ermöglicht, sieht vor, dass die Vorrichtung dazu eingerichtet ist, vor dem Prägen des Materials einen Abstand zwischen zumindest zwei aufeinander folgenden Aufdrucken auf dem zu prägenden Material zu erfassen und bei einer Abweichung dieses Abstandes von einem Sollabstand die Längsausdehnung des Materials entsprechend der ermittelten Abweichung zu verändern.

Eine bevorzugte Variante der Erfindung seiht vor, dass die Vorrichtung zumindest eine den Prägewalzen vorgeschaltete Bilderkennungseinheit zur Erfassung der Position zumindest eines auf dem zu prägende Material aufgebrachten Aufdrucks und zumindest eine den Prägewalzen vorgeschaltete auf das zu prägende Material wirkende Bremsvorrichtung zur Veränderung einer Längsspannung des zu prägenden Materials aufweist, wobei zumindest eine Steuerung vorgesehen ist, die dazu eingerichtet ist, bei einer Positionsabweichung des Aufdruckes von einer Sollposition die Bremsvorrichtung zu betätigen, sodass das eine Längsspannung des zu prägende Material entsprechend einer von der Bremsvorrichtung auf seine Oberfläche ausgeübten Kraft verändert wird, wobei die von der Bremsvorrichtung auf das zu prägende Material ausgeübte Kraft von der ermittelten Positionsabweichung abhängig ist. Durch die Verwendung einer Bremsvorrichtung kann die Bahnspannung des zu prägenden Materials auf einfache Weise verändert werden.

Vorteilhafterweise kann die Bremsvorrichtung zwei Bremswalzen aufweisen, zwischen welchen das zu prägende Material durchgeführt wird. Die Verwendung von Bremswalzen eignet sich sehr gut, um die Spannung des Materials zu regulieren, da diese so eingestellt werden können, dass stets eine Drehung der Walzen ermöglicht ist, ohne eine Reißgrenze des Materials zu erreichen.

Die Längsspannung einer Bahn des zu prägenden Materials kann sehr gut dadurch kontrolliert werden, dass der Anpressdruck der beiden Bremswalzen gegeneinander einstellbar ist.

Um die Position eines Aufdruckes auf dem zu prägenden Material erkennen zu können, kann die Bilderkennungseinrichtung dazu eingerichtet sein, gespeicherte charakteristische Merkmale des Aufdruckes oder ein Bild des Aufdruckes mit einem aufgenommen Bild oder charakteristischen Merkmalen eines auf dem zu prägenden Material aufgedruckten Aufdruckes zu vergleichen.

Zur Feststellung einer korrekten Platzierung von Aufdrucken auf der Oberfläche des zu prägenden Materials kann die Steuerung dazu eingerichtet sein, den Abstand zwischen zumindest zwei aufeinander folgenden, auf das zu prägende Material aufgebrachten Aufdrucken zu ermitteln und zu überprüfen, ob dieser Abstand mit einem Sollabstand übereinstimmt.

Eine vorteilhafte Ausführungsform der Erfindung, welche eine optimale Positionskorrektur eines Aufdruckes ermöglicht, kann die Steuerung weiters dazu eingerichtet sein, bei Abweichung des Sollabstandes von dem ermittelten Abstand die für den Ausgleich dieser Abweichung erforderliche, auf das zu prägende Material mittels der Bremsvorrichtung auszuübende Kraft zu bestimmen.

Eine besonders vorteilhafte Variante der Erfindung, welche sich dadurch auszeichnet, dass auch bei variierender Materialdicke und somit variierendem Dehnungsverhalten des Materials ein konstant gutes Ergebnis erzielt werden kann, sieht vor, dass die Vorrichtung dazu eingerichtet ist, anhand der den Prägewalzen nachgeschalteten optischen Messvorrichtung zu überprüfen, ob eine Position des zumindest einen aufgeprägten Musters in Bezug auf den zumindest einen Aufdruck einer Sollposition entspricht, wobei die mit der Bremsvorrichtung verbundene Steuerung dazu eingerichtet ist, die von der Bremsvorrichtung auf das zu prägende Material ausgeübte Kraft in Abhängigkeit von dem Messergebnis der Positionsüberprüfung der den Prägewalzen nachgeschalteten optischen Messvorrichtung zu regeln, um eine etwaige Abweichung der Sollpositionen von Aufdruck und aufgeprägtem Muster zueinander auszugleichen.

Die erfindungsgemäße Vorrichtung kann in besonders vorteilhafter Weise bei einem Verfahren zum Prägen eines Mundstückbelagmaterials einer Zigarette zum Einsatz kommen.

Eine kostengünstige Variante der Erfindung sieht vor, dass als Mundstückbelagmaterial Papier verwendet wird. Grundsätzlich kann der Mundstückbelag aber aus jedem anderen geeigneten Material hergestellt sein, beispielsweise aus einer Kunststofffolie oder aus einem Laminat, beispielsweise aus einem Aluminium kaschierten Papier, Cellophan, bedampften Materialien, Gewirken, etc.

So sieht beispielsweise eine Ausführungsform der Erfindung vor, dass als Mundstückbelagmaterial eine Folie, insbesondere ein mit einer Heißprägefolie beschichtetes Material, verwendet wird, die vor dem Prägen erhitzt werden kann.

Gemäß dem erfindungsgemäßen Verfahren kann vor dem Prägen des Materials ein Abstand zwischen zumindest zwei aufeinander folgenden Aufdrucken auf dem zu prägenden Material erfasst und bei einer Abweichung dieses Abstandes von einem Sollabstand die Längsausdehnung des Materials entsprechend der ermittelten Abweichung verändert werden.

Entsprechend einer vorteilhaften Variante der Erfindung kann mit zumindest einer den Prägewalzen vorgeschaltete Bilderkennungseinheit die Position zumindest eines auf dem zu prägenden Mundstückbelagmaterial aufgebrachten Aufdrucks erfasst und mit zumindest einer den Prägewalzen vorgeschalteten auf das zu prägende Mundstückbelagmaterial wirkende Bremsvorrichtung eine Längsspannung des zu prägenden Mundstückbelagmaterials verändert werden, wobei zumindest eine Steuerung vorgesehen sein kann, die bei einer Positionsabweichung des Aufdruckes von einer Sollposition die Bremsvorrichtung betätigt, sodass die Längsspannung des zu prägende Mundstückbelagmaterials entsprechend einer von der Bremsvorrichtung auf das zu prägende Mundstückbelagmaterial ausgeübten Kraft verändert wird, wobei die von der Bremsvorrichtung auf das zu prägende Mundstückbelagmaterial ausgeübte Kraft von der ermittelten Positionsabweichung abhängig ist.

Eine besonders vorteilhafte Variante der Erfindung sieht vor, dass das zu prägende Mundstückbelagmaterial vorgespannt wird. Die Vorspannung des Materials hat die Wirkung, dass die Längsdehnung des Mundstückbelagmaterials durch Reduzierung der Bremskraft verringert werden kann. Somit kann eine Längenkorrektur sowohl in als auch gegen eine Förderichtung der Bahn des zu prägenden Materials vorgenommen werden.

Gemäß einer bevorzugten Variante des erfindungsgemäßen Verfahrens können mittels der Bilderkennungseinheit gespeicherte charakteristische Merkmale des Aufdruckes oder ein gespeichertes Bild des Aufdruckes mit einem aufgenommen Bild oder charakteristischen Merkmalen eines auf dem zu prägenden Material aufgebrachten Aufdruckes verglichen werden.

Entsprechend einer vorteilhaften Weiterbildung des erfindungsgemäßen Verfahrens kann mittels der Steuerung der Abstand zwischen zumindest zwei aufeinander folgenden auf das zu prägende Material aufgebrachten Aufdrucken ermittelt und überprüft werden, ob dieser Abstand mit einem Sollabstand übereinstimmt.

Bei Abweichung des Sollabstandes von dem ermittelten Abstand kann die für den Ausgleich dieser Abweichung erforderliche, auf das zu prägende Material mittels der Bremsvorrichtung auszuübende Kraft von der Steuerung vorgegeben werden.

Weiters kann vorgesehen sein, dass anhand der den Prägewalzen nachgeschalteten Bilderkennungseinheit überprüft wird, ob eine Position des zumindest einen aufgeprägten Musters in Bezug auf den zumindest einen Aufdruck einer Sollposition entspricht, wobei die von der Bremsvorrichtung auf das zu prägende Material ausgeübte Kraft in Abhängigkeit von dem Ergebnis der Positionsüberprüfung der den Prägewalzen nachgeschalteten Bilderkennungseinheit geregelt wird, um eine etwaige Abweichung der Sollposition von Aufdruck und aufgeprägtem Muster zueinander auszugleichen.

Die eingangs genannte Aufgabe lässt sich auch mit einer Prägewalze der oben genannten Art dadurch lösen, dass die Prägestrukturen des zumindest einem ersten und des zumindest einem zweiten radial umlaufenden Oberflächenabschnittes der Prägewalze seitlich und in radial umlaufender Richtung versetzt zueinander angeordnet sind. Unter "Obertlächenabschnitten" sind hierbei Zonen zu verstehen, welche quer zur Längsrichtung bzw. Höhe der Walze betrachtet nebeneinander und parallel zueinander auf der Zylindermantelfläche der Walze umlaufen und durch erhabene Stellen, insbesondere Pyramidenstümpfe, gebildete Prägestrukturen aufweisen. Unter einer Prägestruktur wird eine zusammengehörige Menge von.erhabenen Stellen einer Walze verstanden, welche notwendig ist, um ein einzelnes Logo einzuprägen. Auf ein und demselben Oberflächenabschnitt sind in Rotationsrichtung der Walze mehrere Prägestrukturen hintereinander angeordnet, welche bei Zusammenwirken mit entsprechenden Gegenstrukturen, insbesondere pyramidenstumpfförmigen Strukturen, bevorzugterweise gleichartige Logos einprägen.

Die Erfindung samt weiteren Vorteilen wird im Folgenden anhand einiger nicht einschränkender Ausführungsbeispiele näher erläutert, welche in den Zeichnungen dargestellt sind. In diesen zeigen schematisch:
Fig. 1 eine erfindungsgemäße Vorrichtung;
Fig. 2 eine Vorderansicht zweier Prägewalzen einer ersten Variante einer erfindungsgemäßen Vorrichtung;
Fig. 3 eine Seitenansicht der Prägewalzen aus Fig. 1
Fig. 4 eine perspektivische Ansicht einer der Prägewalzen aus Fig. 1;
Fig. 5 eine Draufsicht auf eine einspurige Prägewalze gemäß einer zweiten Variante einer erfindungsgemäßen Vorrichtung;
Fig. 6 eine Draufsicht auf eine zweispurige Prägewalze gemäß einer dritten Variante der erfindungsgemäßen Vorrichtung;
Fig. 7 eine Draufsicht auf eine zweispurige Prägewalze, wobei die Prägestrukturen durch die Synchronisationsmittel gebildet werden;
Fig. 8 eine Draufsicht auf eine Antriebswalze zum Antreiben der Prägewalze aus Fig. 7;
Fig. 9 eine Draufsicht auf ein dreispuriges Prägedesign;
Fig. 10 eine perspektivische Ansicht einer Prägestation mit einer Antriebswalze und zwei Prägewalzen;
Fig. 11 eine Darstellung einer Spiegelung einer zu prägenden Struktur;
Fig. 12 eine Draufsicht auf Abschnitte zweier mittels der zweispurigen Prägewalze aus Fig. 4 geprägte Bahnen eines Mundstückbelagmaterials;
Fig. 13 eine vierte Variante einer erfindungsgemäßen Vorrichtung;
Fig. 14 noch eine fünfte Variante der erfindungsgemäßen Vorrichtung;
Fig. 15 eine sechste Variante der erfindungsgemäßen Vorrichtung
Fig. 16 eine Prinzipskizze zur Veranschaulichung des erfindungsgemäßen Verfahrens und
Fig. 17 eine weitere Prinzipskizze zur Veranschaulichung des erfindungsgemäßen Verfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die Figuren sind zusammenhängend und übergreifend beschrieben.

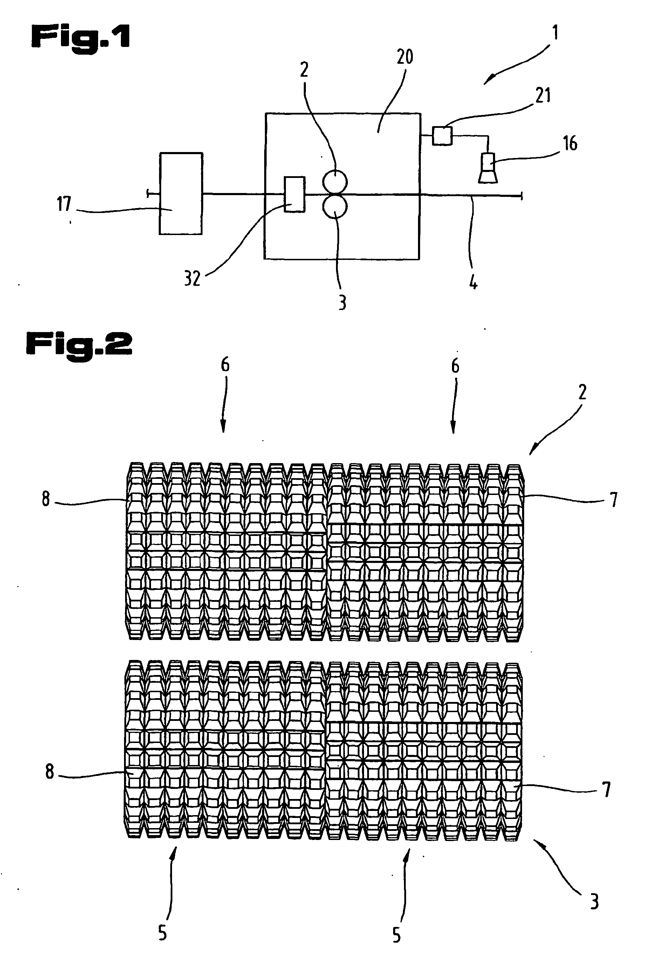

Gemäß Fig. 1 kann eine erfindungsgemäße Vorrichtung 1 zwei oder mehrere Prägewalzen 2 und 3 aufweisen, zwischen welchen ein flächiges Material 4 zum Einprägen eines Musters durchgeführt wird. Die Bewegungen der Prägewalzen 2 und 3 sind erfindungsgemäß miteinander synchronisiert. Die Synchronisation der Prägewalzen 2 und 3 kann mittels über Mantelflächen der Prägewalzen 2 und 3 verteilter Synchronisationsmittel oder elektronisch und/oder elektromechanisch erfolgen.

Wie in Fig. 2 dargestellt, können die Prägewalzen 2 und 3 zwei oder mehr Prägespuren 5 und 6 aufweisen. Mit einer Prägespur 5 bzw. 6 kann jeweils eine Bahn des Materials 4 geprägt werden. Erfolgt die Synchronisation mittels an Mantelflächen der Prägewalzen 2 und 3 angeordneter Synchronisationsmittel 7, 8, sind diese den unterschiedlichen Prägespuren 5, 6 zugeordnet. Die unterschiedlichen Prägespuren 5, 6 zugeordneten Synchronisationsmittel 7 und 8 derselben Prägewalze 2 sind erfindungsgemäß zueinander versetzt angeordnet. Unter "versetzt" wird in diesem Dokument in bzw. gegen Rotationsrichtung der betrachteten Prägewalze versetzt verstanden.

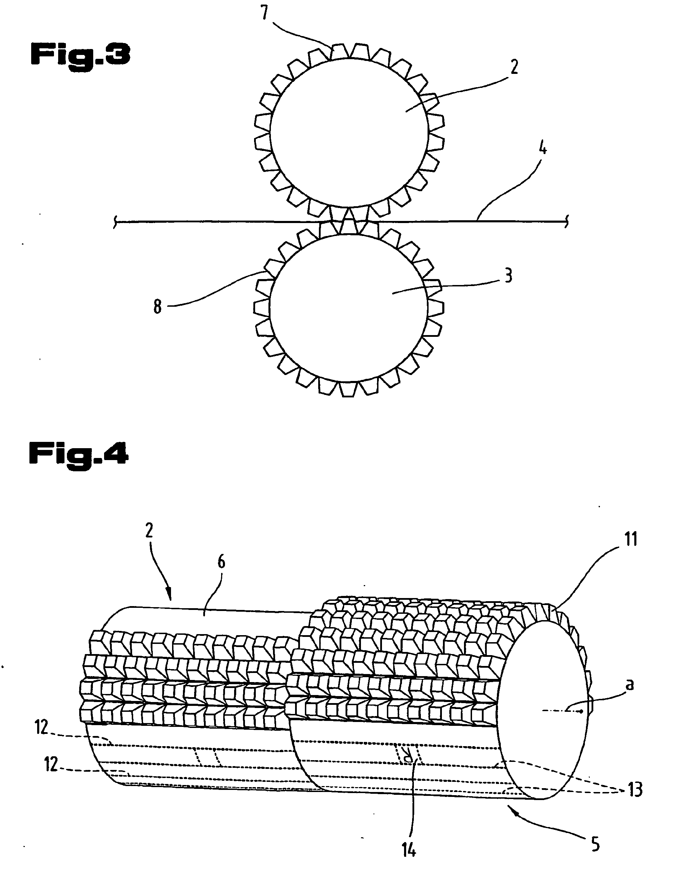

Die Synchronisationsmittel 7, 8 der Prägewalzen können über die Mantelflächen der Prägewalzen 2, 3 verteilte erhabene Stellen sein und mit Ausnahme von Oberflächenabschnitten, welche weiter untern näher erläuterte Prägestrukturen bzw. Gegenstücke zu diesen aufweisen, im wesentlichen die Mantelflächen der je zugeordneten Prägewalzen 2, 3 bedecken. Im Bereich der Synchronisationsmittel 7, 8 sind die Mantelflächen der Prägewalzen 2, 3 zueinander kongruent ausgebildet, wie beispielsweise in Fig. 3 dargestellt. Auch können die Synchronisationsmittel 7, 8 derselben Prägewalze 2, 3 bzw. die Synchronisationsmittel 7, 8 aller Prägewalzen 2, 3 gleichartig ausgebildet sein.

Darüber hinaus sind die erhabenen Stellen eines ersten radial umlaufende Oberflächenabschnittes erfindungsgemäß gegenüber den erhabenen Stellen eines zweiten Oberflächenabschnittes derselben Prägewalze versetzt angeordnet. Gemäß der in Fig. 2 und 4 dargestellten Variante der Erfindung entsprechen diese Oberflächenabschnitte den Prägespuren 6 und 5.

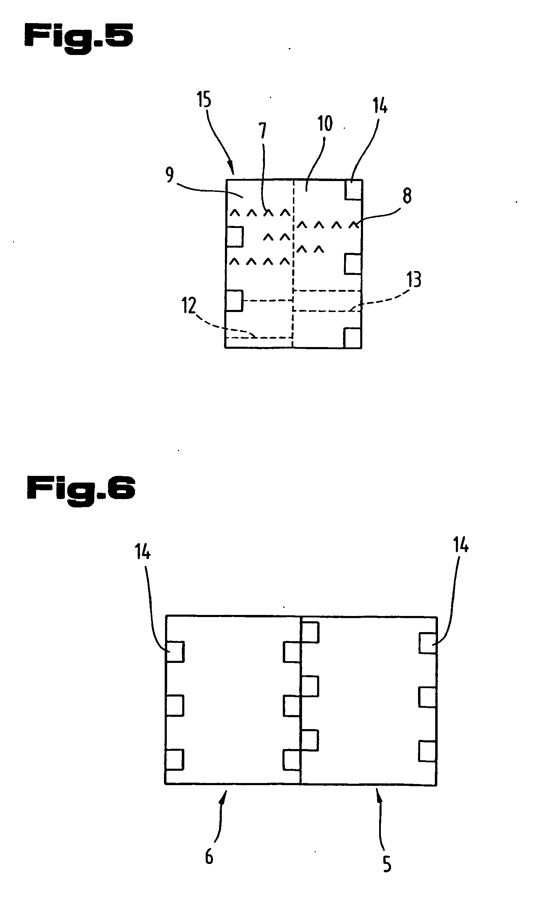

Gemäß Fig. 5 können jedoch auch bei einer einspurigen Ausführungsform der Prägewalzen diese radial umlaufende Oberflächenabschnitte 9, 10 aufweisen, deren Synchronisationsmittel 7 und 8 zueinander versetzt angeordnet sind.

Wie in Fig. 3 und 4 dargestellt, können die erhabenen Stellen bzw. die Synchronisationsmittel 7, 8 als Zähne 11 mit einer pyramidenstumpfförmigen Gestalt ausgebildet sein, wobei jedoch auch andere Zahnformen möglich sind, die ein zuverlässiges Ineinandergreifen gewährleisten, beispielsweise eine kegelstumpfförmige Zahnform. In dem dargestellten Fall von pyramidenstumpfförmigen Zähnen 11 steht bei einem Ineinandergreifen der Zähne der beiden Prägewalzen immer ein Zahn 11 der ersten Walze 2 mit vier Zähnen 11 der zweiten Walze 3 in Kontakt bzw. wird von diesen umgeben.

Wie aus den Figuren 2,4 und 5 weiters ersichtlich, können die Synchronisationsmittel 7, 8 auf den Oberflächen der Prägewalzen 2 und 3 in zueinander parallelen Reihen angeordnet sein. Ferner können die Reihen des ersten und des zweiten, in Fig. 5 mit 9 und 10 bezeichneten Oberflächenabschnittes bzw. der Prägespuren 5, 6 zueinander versetzt sein. In Blickrichtung einer zur Längsachse parallelen Richtung kommt hierbei zwischen zwei Reihen des ersten Oberflächenabschnittes 9 bzw. Prägespur 6 jeweils eine Reihe des zweiten Oberflächenabschnittes 10 bzw. der zweiten Prägespur 5 und vice versa zu liegen. Das bedeutet beispielsweise im Fall der in Fig. 4 dargestellten Ausführungsform der Erfindung, dass die von den stumpfen Spitzen der Pyramiden der ersten Prägespur 6 gebildeten, parallel zur Längsachse der Prägewalze 2 verlaufenden Reihen 12 jeweils in der Verlängerung eines zwischen den Pyramiden liegenden, ebenfalls parallel zur Längsachse (a) der Prägewalze 2 verlaufenden Tals 13 liegen. Die stumpfen Spitzen der Pyramiden sind in Fig. 4 mit strichlierten Linien angedeutet, während die dazwischen liegenden Täler als freie Flächen dargestellt sind.

Durch die in den vorherigen Absatz erwähnte Anordnung der Reihen bzw. Zähne 11 lässt sich eine besonders gute Synchronisation der Prägewalzen 2 bzw. 3 über ihre Mantelflächen erzielen, da stets ein Teil der pyramidenförmigen Zähne 11 miteinander in Eingriff steht. An dieser Stelle sei erwähnt, dass die Zähne 11 der Prägewalzen 2 und 3 gleichartig ausgebildet sein können. Allerdings ist es auch möglich, dass die Zähne 11 der Prägewalze 2 beispielsweise kürzer oder länger als die Zähne 11 der Prägewalze 3 ausgebildet sein können.

In den in den Figuren 1 bis 5 dargestellten Ausführungsformen der Erfindung kann eine der Prägewalzen 2, 3 fest gelagert und angetrieben sein, während die andere frei drehbar auf einer Achse gelagert und durch Federkraft, pneumatisch oder auf andere Weise nachgiebig mit einstellbarem Druck gegen die angetriebene Prägewalze 2 bzw. 3 gedrückt werden kann. Die zweite Prägewalze 2 bzw. 3 ist hierbei über die auf den Mantelflächen angeordneten und ineinander greifenden Synchronisationsmittel 7, 8 angetrieben.

Zum Einprägen eines Schrift- bzw. Bildzeichens etc., im Folgenden "Logo" genannt, in das flächige Material, kann eine der Prägewalzen mindestens eine entsprechende Präge- / Perforationsstruktur 14 aufweisen. Der Begriff Logo, wie er hier verwendet wird, umfasst somit alle mit der oder den Präge- /Perforationsstrukturen 14 geprägten Zeichen, dekorative Elemente, Bildelemente etc.

Die Präge- /Perforationsstruktur 14 kann auf einer entsprechend geglätteten Oberflächenschicht der Prägewalze 2 angebracht sein. Die zweite der Prägewalzen 3 kann an ihrer der Prägestruktur 14 entsprechenden Stelle mit einer Gegendruckfläche versehen sein.

Die dem Logo entsprechende Prägestruktur 14 kann gegenüber einer Normalansicht des Logos zweimal gespiegelt auf einer der Prägewalzen 2, 3 angebracht sein. Die Spiegelung kann hierbei einmal um eine vertikale Achse und einmal um eine horizontale Achse erfolgen. In Fig. 4 stellt die Prägestruktur 14 ein zweimal gespiegeltes "R" dar. Diese Ausführungsform der Erfindung eignet sich besonders für ein Prägen von oben, also für eine Anordnung der Prägestruktur 14 an der in Fig. 3 oberen Prägewalze 2. Gleiches gilt natürlich für die in Fig. 5 und 6 dargestellten Ausführungsformen der Erfindung mit mehreren zueinander seitlich verschobenen Prägestrukturen 14, die auch zweimal gespiegelt sein können.

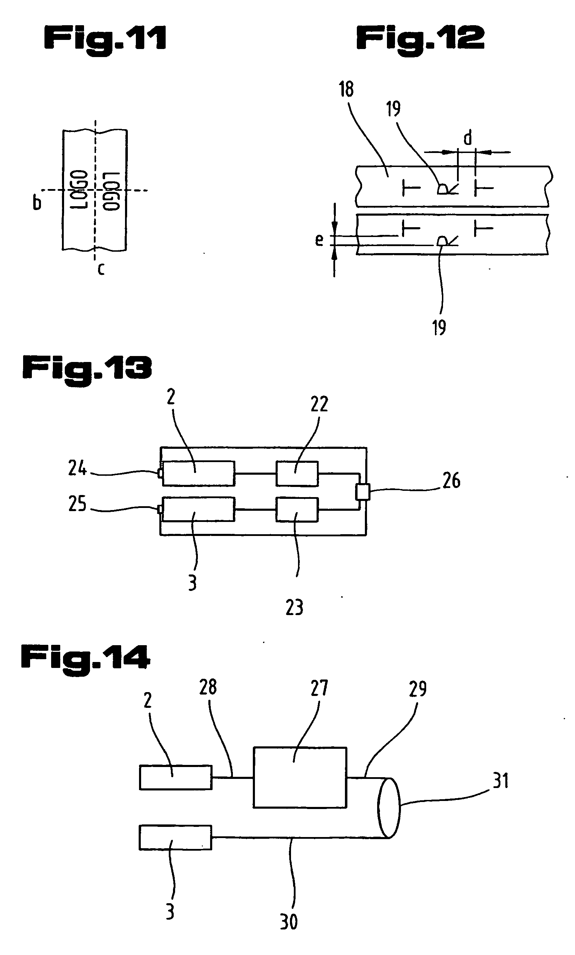

In Fig. 11 ist ein weiteres Beispiel zur Erläuterung gezeigt, wie die oben erwähnte Spieglung zu verstehen ist. Hierbei ist das einzuprägende Logo, in dem vorliegenden Fall das Zeichen "LOGO", zuerst um eine geometrische Achse (b) und dann um eine geometrische Achse (c) gespiegelt.

Gemäß Fig. 5 kann eine einspurige Prägewalze 15 mehrere Präge- / Perforationsstrukturen 14 aufweisen, die seitlich und in radial umlaufender Richtung der Prägewalze 15 zueinander versetzt angeordnet sind. Obwohl Fig. 5 sich auf eine Prägewalze 15 mit nur einer Prägespur bezieht, ist es natürlich auch möglich, dass eine zwei oder mehrspurige Prägewalze, beispielsweise die in Fig. 4 dargestellte Prägewalze 2, ebenfalls eine oder mehrere Prägespuren 5, 6 mit seitlich und in radial umlaufender Richtung zueinander versetzten Prägestrukturen 14 aufweist. In Fig. 6 ist eine derartige Prägewalze mit zwei Prägespuren 5, 6 und versetzten Prägestrukturen 14 dargestellt.

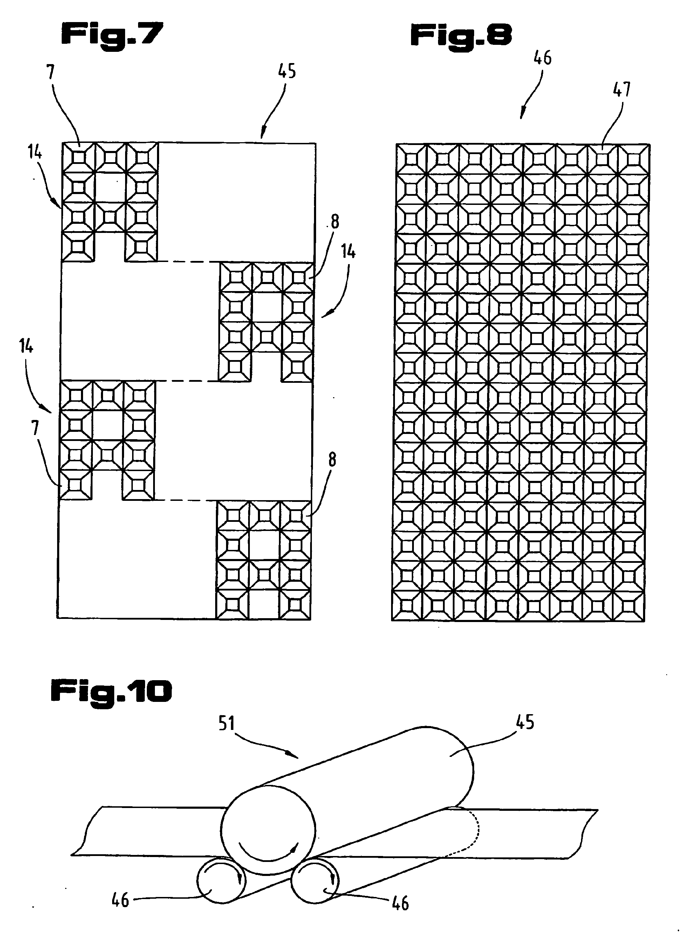

Wie in Fig. 7 dargestellt können die Prägestrukturen 14 einer Prägewalze 45 durch die Synchronisationsmittel 7 und 8 gebildet sein, sodass auf der betreffenden Prägewalze 45 nur im Bereich der aufzudruckenden Logos Synchronisationsmittel 7, 8 angeordnet sind.

Wie aus Fig. 8 ersichtlich kann eine Antriebswalze 46 mit den Synchronisationsmitteln 7, 8 gleichartige pyramidenstumpfförmige Synchronisationsmittel 47 aufweisen, die gleichmäßig über die Oberfläche der Antriebswalze 46 verteilt sind..

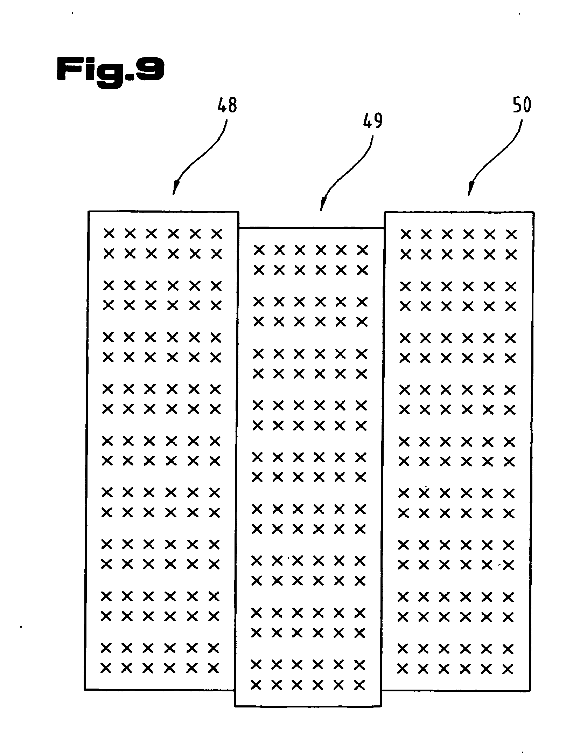

In Fig. 9 ist die erfindungsgemäße Lösung anhand von drei zueinander versetzten Prägespuren 48, 49, 50 verdeutlicht. Die durch die Synchronisationsmittel gebildeten Prägestrukturen 14 sind zueinander versetzt, wodurch ein permanenter Eingriff der Synchronisationsmittel 47 der Antriebswalze 46 gewährleistet ist.

Gemäß Fig. 10 kann eine erfindungsgemäße Prägestation 51 eine Walze 45 mit versetzten Prägestrukturen und zwei vollflächig mit Pyramidenstümpfen 47 versehene Walzen 46 aufweisen.

Durch das Versetzen der Prägestrukturen 14 kann ein permanenter Eingriff der Synchronisationsmittel 7, 8, 47 der Prägewalzen 45 und der Antriebswalze 46 erzielt werden.

Wie weiters aus Fig. 1 ersichtlich, kann die erfindungsgemäße Vorrichtung 1 auch eine Bilderkennungseinheit 16 zur Erfassung der Position eines mit der Präge- / Perforationsstruktur 14 erzeugten Musters auf dem zu prägenden Material 4 aufweisen.

Mit dieser Bilderkennungseinheit 16 können beispielsweise ein in Fig. 12 dargestellter Längsabstand (d) sowie ein seitlicher Abstand (e) zwischen einem mit einer Druckvorrichtung 17 aufgedruckten Aufdruck 18 und dem mit den Prägewalzen 2, 3 eingeprägten Logo 19 erfasst werden. Unter dem Begriff "Aufdruck" werden in diesem Dokument unabhängig von der Art der Aufbringung auf das Material 4 alle sichtbaren Veränderungen des Materials 4 verstanden, die ein Zeichen, Schrift- oder Zahlenelemente, dekorative Elemente, Bildelemente, etc. zum Gegenstand haben. Insbesondere umfasst der Begriff "Aufdruck", wie er hier verstanden wir, neben graphischen Darstellungen auch Prägungen oder Perforationen des Materials 4. Im Fall von Prägungen oder Perforationen, die vor dem Prägen des Musters 19 auf das Material 4 aufgebracht werden, kann anstelle der Druckvorrichtung 17 eine entsprechende Präge/Perforationsvorrichtung vorgesehen sein. Es versteht sich von selbst, dass das Aufbringen der Aufdrucke 18 nicht unmittelbar vor dem Prägen des Musters 19 erfolgen muss. So könnte beispielsweise das Material 4 andernorts mit den Aufdrucken 18 versehen werden und hernach unter eventueller Zwischenlagerung an den Aufstellungsort der erfindungsgemäßen Vorrichtung 1 gebracht und verarbeitet werden.

Kommt es zu einer Abweichung der ermittelten Position des aufgeprägten Logos 19 von der Sollposition, so kann dies entsprechend korrigiert werden.

Eine Längenabweichung von dem Sollwert kann beispielsweise durch entsprechende Dehnung des zu prägenden Materials 4 ausgeglichen werden. Eine andere Möglichkeit eine Längenabweichung zu korrigieren bestünde in der Verlängerung oder Verkürzung der Lauflänge des Materials 4 zwischen der Druckvorrichtung 17 und den Prägewalzen 2 und 3. Hierzu kann die Druckvorrichtung 17 oder eine die Prägewalzen 2 und 3 enthaltende Prägestation 20 entsprechend bewegt werden. Dies kann automatisch gesteuert erfolgen. So können die Druckvorrichtung und/oder die Prägestation 20 mittels mit einer Steuerung 21 in Verbindung stehender Antriebe entsprechend bewegt werden. Zur Erleichterung der Bewegung können die Druckvorrichtung 17 und/oder die Prägestation 20 auf Rollen oder Rädern gelagert sein. Zur Verbesserung der Führung können die Druckvorrichtung 17 bzw. die Prägestation 20 auch auf Schienen laufen.

Eine Abweichung des seitlichen Abstands (c) zwischen dem eingeprägten Logo 19 und dem Aufdruck 18 kann zum Beispiel über eine seitliche Positionsveränderung der Prägewalzen 2, 3 oder über einen den Prägewalzen 2, 3 vorgeschalteten, hier nicht dargestellten Drehrahmen korrigiert werden.

Gemäß der in Fig. 13 gezeigten Ausführungsform der Erfindung kann jede Prägewalze 2, 3 von einem eigenen Motor 22, 23 angetrieben sein. In diesem Fall ist es nicht unbedingt erforderlich, dass eine Synchronisation über die Mantelflächen der Prägewalzen 2, 3 erfolgt, sondem dies kann, wie im folgenden näher erläutert, auch elektronisch gesteuert bzw. elektromechanisch erfolgen.

Die Bewegungen der Prägewalzen 2, 3 können mittels Sensoren 24, 25 überwacht werden, wobei auch eine Relativposition der Prägewalzen 2, 3 zueinander erfasst werden kann. Die Sensoren 24, 25 können beispielsweise als Drehwinkelsensoren ausgeführt sein. Weiters kann die Vorrichtung eine mit den Sensoren 24, 25 und den Motoren 22, 23 der Prägewalzen 2, 3 verbundene Steuerung 26 aufweisen, welche dazu eingerichtet ist, anhand von den Sensoren 24, 25 an sie übermittelten Daten die Drehzahl der Prägewalzen 2, 3 zum Ausgleich einer Differenz zwischen einer Sollrelativlage und einer gemessenen Relativlage zu verändern. Auf diese Weise können die beiden Prägewalzen 2, 3 elektronisch gesteuert synchronisiert werden.

Wie in Fig. 14 dargestellt, kann die Vorrichtung einen Elektromotor 27 aufweisen, der gleichzeitig je eine Antriebswelle 28, 29 für je eine Prägewalze 2, 3 mit der gleichen Drehzahl antreibt, wobei die Prägewalzen 2, 3 parallel zueinander angeordnet sind. Bei dieser Ausführungsform der Erfindung kann die Synchronisation der Bewegungen der Prägewalzen 2, 3 durch den Elektromotor 27 selbst erzielt werden, der beide Prägewalzen 2, 3 mit der gleichen Drehzahl antreibt. Hierbei weisen die Prägewalzen 2, 3 vorteilhafterweise den gleichen Querschnittsdurchmesser bzw. Querschnittsumfang auf, um eine einfache Aufrechterhaltung der Relativlagen der Mantelflächen der Prägewalzen zueinander zu gewährleisten.

Bevorzugterweise sind die erste und die zweite Antriebswelle 28, 29 einstückig miteinander ausgebildet. Durch die einstückige Ausbildung der Antriebswellen 28, 29 kann auf einfache Weise eine Synchronisation der Drehbewegungen der Antriebswellen 28, 29 und in weiterer Folge der Prägewalzen 2, 3 erzielt werden. So kann die erste Prägewalze 2 beispielsweise von der Antriebswelle 28 direkt angetrieben sein, während die zweite Prägewalze 3 von einer zu der Antriebswelle 28 parallelen Welle 30 angetrieben sein kann. Die Antriebswelle 29 kann mittels eines Kraftkopplungsgliedes 31, beispielsweise eines Zahnriemens, etc., mit der Welle 30 verbunden sein.

Auch bei den in den Figuren 13 und 14 dargestellten Varianten der Erfindung kann eine der Prägewalzen 2, 3 fest gelagert sein, während die andere der Prägewalzen 2, 3 nachgiebig mit einstellbarem Druck gegen die erste der Prägewalze 2, 3 gedrückt werden kann.

Auch kann bei allen oben genannten Ausführungsformen der Erfindung vorgesehen sein, dass die erfindungsgemäße Vorrichtung eine in Fig. 1 mit dem Bezugszeichen 32 bezeichnete, auf das zu prägende Material 4 wirkende Strahlungs- und/oder Wärmequelle aufweist, beispielsweise eine Strahlenheizung oder eine Konvektionsheizung.

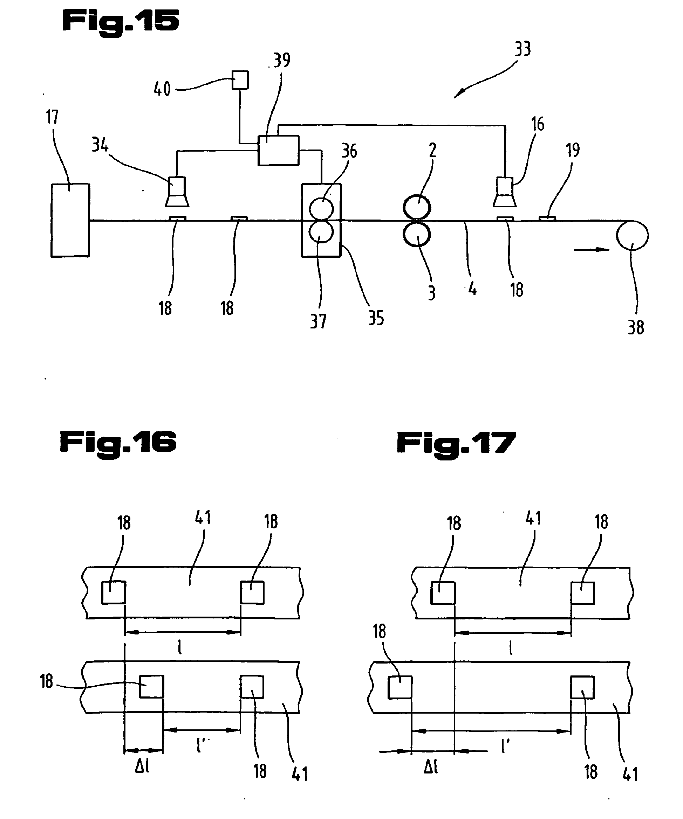

Wie in Fig. 15 dargestellt, kann die erfindungsgemäße Vorrichtung 33 gemäß einer weiteren Variante der Erfindung eine den Prägewalzen 2, 3 vorgeschaltete, weitere Bilderkennungseinheit 34 zur Erfassung der Position eines auf dem zu prägende Material 4 aufgebrachten Aufdrucks 18 aufweisen.

Darüber hinaus kann eine den Prägewalzen 2, 3 vorgeschaltete auf das zu prägende Material 4 wirkende Bremsvorrichtung 35 zur Veränderung einer Längsspannung des zu prägenden Materials 4 vorgesehen sein. Die Bremsvorrichtung 35 kann zwei Bremswalzen 36, 37 aufweisen, zwischen welchen das zu prägende Material 4 in Förderrichtung durchgeführt wird.

Die Bremswalzen 36 und 37 können frei drehbar gelagert sein. Weiters kann eine der Bremswalzen 36, 37 z.B. die Bremswalze 37 auf einer raumfesten Achse gelagert sein, während die andere Bremswalze 36 mittels Federkraft, pneumatisch oder auf andere Weise mit einstellbarem Druck gegen die Bremswalze 37 gedrückt werden kann. Hierbei kann die Achse der Bremswalze 37 in einem hier nicht dargestellten Rahmen in Richtung der Bremswalze 36 und in der entgegengesetzten Richtung beweglich geführt sein.

Anstelle von zwei Bremswalzen 36, 37 kann auch nur eine Bremswalze 36 oder 37 vorgesehen sein, welche auf eine entsprechende Gegendruckfläche drückt. Das Material 4 kann hierbei zwischen der Bremswalze und der Gegendruckfläche durchlaufen. Die Gegendruckfläche kann beispielsweise durch einen gekrümmten Oberflächenabschnitt einer Stange gebildet sein, deren Längsachse parallel zur Rotationsachse der Bremswalze 36 bzw. 37 Stange angeordnet sein kann. Somit kann die Bremsvorrichtung 35 zumindest eine mit einer Gegendruckfläche zusammenwirkende Bremswalze 36, 37 aufweisen, wobei das zu prägende Material zwischen der Bremswalze 36, 37 und der Gegendruckfläche durchgeführt ist.

Weiters könnten anstelle von Bremswalzen 36,37 auch Klemmelemente, beispielsweise in Form von aufeinander zu bewegbaren Bremsbacken, zwischen welchen das Material durchgeführt werden kann, zum Einsatz kommen. Alternativ zur Verwendung von zwei bewegbaren Bremsbacken könnte auch nur ein Bremsbacken, der in Richtung einer Gegendruckfläche bewegbar ist vorgesehen sein. Somit könnte die Bremsvorrichtung 35 gemäß dieser Variante der Erfindung zumindest einen Bremsbacken aufweisen, der gegen Gegendruckfläche oder gegen einen anderen Bremsbacken bewegbar ist, wobei das Material 4 zwischen den Bremsbacken oder dem zumindest einen Bremsbacken und der Gegendruckfläche in Förderrichtung durchgeführt ist.

Gemäß einer weiteren Variante der Erfindung kann , falls das zu prägende Material 4 zu einer Rolle aufgewickelt ist, eine Abrollvorrichtung mit einer Bremsvorrichtung ausgestattet sein. Die Bremsvorrichtung der Abrollvorrichtung kann dann entsprechend der gewünschten Bahndehnung betätigt werden. In diesem Fall könnte auf die Anordnung einer weiteren Bremsvorrichtung verzichtet werden. Diese Ausführungsform eignet sich vor allem für eine Variante der Erfindung , bei welcher der Aufdruck 18 schon auf dem aufgerollten Material 4 aufgebracht ist.

Bei allen Varianten der Erfindung kann als Messglied für die Bahnspannung eine Tänzerwalze oder eine weglosen Bahnspannungsmesswalze verwendet werde.

Die Förderrichtung ist in Fig. 15 durch einen Pfeil angedeutet. Das zu prägende Material 4 wird von einer in Förderrichtung wirkenden Zugkraft in Richtung der Prägewalzen gezogen werden. Diese Zugkraft kann beispielsweise von den Prägewalzen 2 und 3 oder auch von einer der Prägewalzen 2, 3 nachgeschalteten Zugvorrichtung erzeugt werden. Die den Prägewalzen 2, 3 eventuell nachgeschaltete Zugvorrichtung kann beispielsweise als angetriebene Wickelrolle 38 ausgeführt sein, auf welche das Material 4 nach dessen Prägung aufgewickelt werden kann.

Die erfindungsgemäße Vorrichtung 33 kann auch eine Steuerung 39 aufweisen, beispielsweise einen entsprechend programmierten Mikro- oder Signalprozessor, die dazu eingerichtet ist, bei einer Positionsabweichung des Aufdruckes 18 von einer Sollposition, die Bremsvorrichtung 35 zu betätigen. Hierdurch kann die Längsspannung des zu prägenden Materials 4 entsprechend einer von der Bremsvorrichtung 35 auf das Material 4 ausgeübten Kraft verändert werden. Anders gesagt, wird das zu prägende Material 4 von der Bremsvorrichtung 35 ausgeübten Kraft zurückgehalten und durch die in Förderrichtung unvermindert wirkende Zugkraft in Längsrichtung gedehnt. Die Dehnung des Materials 4 kann somit bei konstanter Zugkraft über die Einstellung der von der Bremsvorrichtung 35 auf das Material 4 ausgeübten Kraft gesteuert werden. Eine ermittelte Positionsabweichung kann daher mittels der Bremsvorrichtung 35 korrigiert werden.

Hierzu kann die Steuerung 35 dazu eingerichtet sein, bei Abweichung des Sollabstandes von dem ermittelten Abstand die für den Ausgleich dieser Abweichung erforderliche, auf das zu prägende Material 4 mittels der Bremsvorrichtung auszuübende Kraft zu bestimmen. Dies kann beispielsweise dadurch geschehen, dass aus einem mit der Steuerung 39 verbundenen Speicher 40 gespeicherte Werte bzw. Beträge für die einzustellende Kraft bei einer vorgebbaren Abweichung von der Steuerung 39 ausgelesen und an die Bremsvorrichtung 35 weitergeleitet werden. Der Wert für die einzustellende Kraft kann in analoger oder digitaler Form weitergeleitet werden. Weiters kann anstelle des Wertes ein diesem Wert proportionales Signal an die Bremsvorrichtung 35 weitergeleitet werden.

Die einzustellenden Werte bzw. Beträge für die von der Bremsvorrichtung 35 auszuübenden Kraft können zuvor für ein bestimmtes Material 4 experimentell festgestellt werden. Aus den experimentell ermittelten Werten kann beispielsweise ein Kurvenverlauf für den Zusammenhang zwischen Dehnungslänge und ausgeübter Bremskraft für ein bestimmtes Material bei vorgegebener Zugkraft erstellt werden. Hierbei können sämtliche dem Fachmann auf dem Gebiet der digitalen Signalverarbeitung geläufigen Methoden, wie Interpolation, Kalmanfilterung, etc. zum Einsatz kommen.

Aus dem ermittelten Kurvenverlauf kann dann auch für kontinuierliche Positionsabweichungen der entsprechende Wert bzw. Betrag für die von der Bremsvorrichtung 35 auszuübende Kraft ermittelt werden.

Alternativ oder ergänzend zu der oben genannten Ausführungsform können auch mathematische Modelle der Kontinuumsmechanik zur Beschreibung des Dehnungsverhaltens eines konkreten zu prägenden Materials zur Ermittlung der erforderlichen Bremskraft herangezogen werden.

Weiters kann die Vorrichtung 33 dazu eingerichtet sein, anhand der den Prägewalzen 2, 3 nachgeschalteten Bilderkennungseinheit 16 zu überprüfen, ob eine Position des aufgeprägten Musters 19 in Bezug auf den Aufdruck 18 einer Sollposition entspricht. Die Bilderkennungseinheiten 16, 33 können beispielsweise mittels entsprechend programmierter Mikro- oder Signalprozessoren und mit diesen verbundenen digitalen Foto- oder Videokameras realisiert sein. Ein Bild des Aufdrucks 18 oder charakteristische Merkmale des Aufdrucks 18 können in internen Speichern der Bilderkennungseinheiten 16, 33 abgelegt sein. Die Bilderkennungseinheiten 16, 33 können in diesem Fall dazu eingerichtet sein, die gespeicherte charakteristische Merkmale des Aufdruckes 18 oder ein Bild des Aufdruckes 18 mit einem aufgenommen Bild oder charakteristischen Merkmalen eines auf dem zu prägenden Material 4 aufgedruckten Aufdruckes zu vergleichen. Die den Prägewalzen 2, 3 nachgeschaltete Bilderkennungseinheit 16 kann auch ein Bild bzw. charakteristische Merkmale des aufgeprägten Musters 19 in einem Speicher abgelegt haben.

Die Bilderkennung selbst kann beispielsweise mittels Optical Character Recognition "OCR" erfolgen. Weiters sei an dieser Stelle erwähnt, dass hier erwähnte unterschiedliche Bauteile auch zu einem einzigen Bauteil zusammengefasst sein können. Das gilt insbesondere für die verwendeten Steuerungen, so können beispielsweise die Bilderkennungseinheiten 16 und 33 eine gemeinsame Steuerung aufweisen, die mit zwei Kameras verbunden ist.

Die mit der Bremsvorrichtung 35 verbundene Steuerung 39 kann dazu eingerichtet sein, die von der Bremsvorrichtung 35 auf das zu prägende Material 4 ausgeübte Kraft in Abhängigkeit von dem Messergebnis der Positionsüberprüfung der den Prägewalzen 2, 3 nachgeschalteten Bilderkennungseinheit 16 zu regeln. Auf diese Weise kann eine etwaige Abweichung der Sollpositionen von Aufdruck 18 und aufgeprägtem Muster 19 zueinander ausgeglichen werden. Die in diesem Abschnitt beschriebene Ausführungsform der Regelung kann mit der oben beschriebenen Ausführungsform, welche eine Steuerung anhand von gespeicherten Werten vorsieht in vorteilhafter Weise kombiniert werden. So können die vorgegeben Werte zum einen als Startwerte für die Regelung verwendet werden, zum anderen lässt sich auch durch zusätzliche Verwendung der abgespeicherten Werte verhindern, dass fehlerhafterweise nicht sinnvolle Werte für die einzustellende Kraft von der Steuerung 39 an die Bremsvorrichtung 35 übermittelt werden.

An dieser Stelle sei erwähnt, dass anstelle der oben erwähnten Bilderkennungseinheiten 16 und 33 auch andere optische Messvorrichtungen 42 zur Erfassung von Positionen der Aufdrucke 18 und der Muster 19 vorgesehen sein können. Eine derartige optische Messvorrichtung 42 könnte beispielsweise eine Lichtquelle 43 und einen lichtempfindlichen Sensor 44 umfassen. Die Lichtquelle 43 kann beispielsweise Licht im sichtbaren, UV- oder Infrarotbereich emittieren. Die Lichtquelle 43 kann auch als Laser ausgebildet sein. Mit dem Sensor 44 kann beispielsweise die Intensität des durch das zu prägende Material 4 dringenden, von der Lichtquelle 43 emittierten Lichtes gemessen werden und anhand von Intensitätsschwankungen auf die Positionen des Aufdruckes 18 bzw. der Muster 19 auf dem Material 4 geschlossen werden. Natürlich ist auch jede andere Art der optischen Erfassung der Positionen des Aufdruckes 18 bzw. des Musters 19 möglich. So könnten beispielsweise auf dem Aufdruck 18 auch UV-aktive Farbpigmente beigemengt werden, welche mit UV-Licht angeregt werden können, wobei die Positionserfassung durch Erfassen des von dem Aufdruck abgestrahlten UV-Lichtes erfolgen kann.

Die mit der erfindungsgemäßen Vorrichtung erzielten Vorteile können auch mit dem erfindungsgemäßen Verfahren zur Herstellung eines Mundstückbelags für ein Zigarettenmundstück geltend gemacht werden. Bei dem erfindungsgemäßen Verfahren ist das zu prägende Material das Mundstückbelagmaterial. Dieses Material kann, muss aber, wie eingangs erwähnt, nicht, Papier oder Kunststoff sein. Besonders geeignet für die Herstellung und Prägung des Mundstückbelags hat sich beispielsweise die Verwendung einer mit einer Heißprägefolie beschichtetes Material, beispielsweise Papier, erwiesen, die vor dem Durchführen durch die Prägewalzen 2, 3 mit der Strahlungs- und/oder Wärmequelle 32, beispielsweise einer Strahlenheizung oder einer Konvektionsheizung, behandelt bzw. erhitzt wird. Die Heißprägefolie kann auch durch Einsatz einer Strahlungsquelle, beispielsweise einer UV-Lampe, vor dem Prägen erweicht werden. Mit dem erfindungsgemäßen Verfahren kann mit der den Prägewalzen 2, 3 vorgeschalteten Bilderkennungseinheit 34 die Position des auf dem zu prägenden Mundstückbelagmaterial aufgebrachten Aufdrucks 18 erfasst werden. Bei einer Abweichung Δl des Aufdruckes 18 von einer Sollposition wird die Bremsvorrichtung 35 betätigt.

In der oberen Darstellung von Fig. 16 ist ein Mundstückbelagspapier 41 dargestellt, auf welchem die Sollposition durch den Abstand (l) festgelegt ist. Wird nun, wie in der in Fig. 16 unteren Darstellung von der Bilderkennungseinheit 34 ein Abstand (l') erkannt, der kleiner als der Sollabstand (l) zwischen den Aufdrucken 18 ist, so kann die Bremsvorrichtung 35 so betätigt werden, dass die zwischen den Prägewalzen 2, 3 und der Bremsvorrichtung 35 gelegene Bahn des Materials 4 um den Differenzbetrag (Δl) gedehnt wird. Dies hat den Effekt, dass die Prägung des Musters 19 mittels der Prägewalzen 2, 3 in exakter Ausrichtung zu dem Aufdruck 18 erfolgen kann. So ist es beispielsweise möglich, das Muster 19 selbst bei unregelmäßigen Abständen (l') zwischen in exakter Ausrichtung zu dem Aufdruck 18, beispielsweise genau auf diesen, aufzuprägen.

Auch in Zusammenhang mit dem erfindungsgemäßen Verfahren gilt in Bezug auf die Erfassung der Positionen der Aufdrucke 18 und der aufgeprägten Muster 19 das oben in Zusammenhang mit der Vorrichtung 33 Gesagte. So können die Positionen der Aufdrucke 18 und der Muster 19 bzw. die entsprechenden Abstände mit einer beliebigen anderen dafür geeigneten optischen Messmethode erfasst werden. Die angeführten Messmethoden, insbesondere die Verwendung von Bilderkennungseinheiten 16 und 33, sind lediglich beispielhafter Natur und der Erfindungsgedanke ist nicht auf eine bestimmte Messmethode beschränkt.

Um auch eine Abweichung von der Sollposition korrigieren zu können, bei der, wie in Fig. 17 dargestellt, l'> l ist und die somit nicht durch eine Dehnung des Mundstückbelagmaterials 41 korrigiert werden kann, kann das Mundstückbelagmaterial 41 mittels der Bremsvorrichtung 35 in Längsrichtung vorgespannt sein.

Durch Reduzierung der von der Bremsvorrichtung 35 auf das Mundstückbelagmaterials 41 ausgeübten Klemmkraft kann die Dehnung des vorgespannten Mundstückbelagmaterials 41 um den Betrag (Δl) reduziert werden.

Alternativ zur Vorspannung mittels der Bremsvorrichtung 35 könnte das Mundstückbelagmaterial, wenn es als aufgewickelte Rolle vorliegt, auch mit der Bremsvorrichtung der Abwicklungsvorrichtung vorgespannt sein. Durch Reduzierung der Bremskraft auf die Abwickelungsvorrichtung kann die Dehnung des vorgespannten Mundstückbelagmaterials 41 um den Betrag Δl reduziert werden.

Somit lässt sich durch das erfindungsgemäße Verfahren jede Art von Abweichung des Aufdrucks 18 von seiner Sollposition in Längsrichtung des Mundstückbelagmaterials 41 ausgleichen.

Die Dehnung des Mundstückbelagpapiers kann, wie oben in Zusammenhang mit der Vorrichtung 33 beschrieben, gesteuert und/oder mittels einer Regelung erfolgen.

Abschließend sei festgehalten, dass die Ausführungsbeispiele lediglich mögliche Ausführungsvarianten der erfindungsgemäßen Lösung zeigen, wobei die Erfindung nicht auf die speziell dargestellten Ausführungsvarianten eingeschränkt ist. Insbesondere sind auch Kombinationen der einzelnen Ausführungsvarianten untereinander möglich, wobei diese Variationsmöglichkeiten aufgrund der Lehre zum technischen Handeln der gegenständliche Erfindung im Können des auf diesem technischen Gebiet tätigen Fachmannes liegen. Es sind auch sämtliche denkbaren Ausführungsvarianten, die den der Erfindung zugrunde liegenden Lösungsgedanken verwirklichen und nicht explizit beschrieben bzw. dargestellt oder durch Kombinationen einzelner Details der dargestellten und beschriebenen Ausführungsvarianten möglich sind, vom Schutzumfang mit umfasst. Ebenso erstreckt sich der Schutz auch auf die einzelnen Komponenten der erfindungsgemäßen Vorrichtung, soweit diese für sich genommen wesentlich zur Realisierung der Erfindung sind.

**Bezugszeichenaufstellung**

| | | | |
|---|---|---|---|
| 1 | Vorrichtung zum Prägen | 25 | zweiter Sensor |
| 2 | Prägewalze | 26 | Steuerung |
| 3 | Prägewalze | 27 | Elektromotor |
| 4 | bandförmiges Material | 28 | erste Antriebswelle |
| 5 | erste Prägespur | 29 | zweite Antriebswelle |
| 6 | zweite Prägespur | 30 | Welle |
| 7 | Synchronisationsmittel der ersten Prägespur | 31 | Kraftkopplungsglied |
| | | 32 | Strahlungs- und/oder Wärmequelle |
| 8 | Synchronisationsmittel der zweiten Prägespur | 33 | Vorrichtung zum Prägen |
| | | 34 | Bilderkennungseinheit |
| 9 | Oberflächenabschnitt einer Prägewalze | 35 | Bremsvorrichtung |
| 10 | Oberflächenabschnitt einer Prägewalze | 36 | Bremswalze |
| 11 | Zahn | 37 | Bremswalze |
| 12 | Reihe von Zähnen bzw. Synchronisationsmitteln | 38 | Wickelrolle |
| | | 39 | Steuerung |
| 13 | Reihe von Zähnen bzw. Synchronisationsmitteln | 40 | Speicher |
| | | 41 | Mundstückbelagmaterial |
| 14 | Präge- / Perforationsstruktur | 42 | optische Messvorrichtung |
| 15 | einspurige Prägewalze | 43 | Lichtquelle |
| 16 | Bilderkennungseinheit | 44 | Sensor |
| 17 | Druckvorrichtung | 45 | Prägewalze |
| 18 | Aufdruck | 46 | Antriebswalze |
| 19 | eingeprägtes Logo | 47 | Synchronisationsmittel |
| 20 | Prägestation | 48 | Prägespur |
| 21 | Steuerung | 49 | Prägespur |
| 22 | erster Motor | 50 | Prägespur |
| 23 | zweiter Motor | 51 | Prägestation |
| 24 | erster Sensor | | |

## Patentansprüche

1. Vorrichtung (1, 33) zum Einprägen eines vorgebbaren Musters in zumindest ein flächiges, zwischen zumindest zwei Prägewalzen der Vorrichtung durchgeführtes Material (4), wobei die Bewegungen der Prägewalzen miteinander synchronisiert sind, und die Prägewalzen (2, 3) weiters zumindest zwei Prägespuren (5, 6) aufweisen, **dadurch gekennzeichnet, dass** die Bewegungen der Prägewalzen (2, 3) mittels ineinander greifender und über Mantelflächen der Prägewalzen (2, 3) verteilter und unterschiedlichen Prägespuren (5, 6) zugeordneter, Prägestrukturen (14) bildender Synchronisationsmittel (7, 8) miteinander synchronisiert sind, wobei die unterschiedlichen Prägespuren (5, 6) zugeordneten Synchronisationsmittel (7, 8) derselben Prägewalze (2, 3) zueinander versetzt angeordnet sind.

2. Vorrichtung nach Anspruch 1, **dadurch gekennzeichnet, dass** die Synchronisationsmittel (7, 8) der zumindest zwei Prägewalzen (2, 3, 15) über die Mantelflächen der Prägewalzen (2, 3, 15) verteilte, erhabene Stellen sind, wobei die Mantelflächen der Prägewalzen (2, 3, 15) im Bereich der Synchronisationsmittel (7, 8) zueinander kongruent ausgebildet und die erhabenen Stellen von zumindest eines ersten radial umlaufende Oberflächenabschnittes (9) gegenüber den erhabenen Stellen zumindest eines zweiten Oberflächenabschnittes (10) derselben Prägewalze (2, 3, 15) versetzt angeordnet sind.

3. Vorrichtung nach Anspruch 2, **dadurch gekennzeichnet, dass** die erhabenen Stellen des ersten Oberflächenabschnittes (9) und des zweiten Oberflächenabschnittes (10) je in Reihen (12, 13) angeordnet sind, die Reihen (12) des ersten Oberflächenabschnittes (9) zu den Reihen (13) des zweiten Oberflächenabschnittes (10) versetzt sind, wobei in Blickrichtung einer zur Längsachse (a) der Prägewalze (2, 3, 15) parallelen Richtung zwischen zwei Reihen (12) des ersten Oberflächenabschnittes (9) jeweils eine Reihe (13) des zweiten Oberflächenabschnittes (10) zu liegen kommt.

4. Vorrichtung nach einem der Ansprüche 2 oder 3, **dadurch gekennzeichnet, dass** die erhabenen Stellen als Zähne (11) ausgebildet sind.

5. Vorrichtung nach Anspruch 4, **dadurch gekennzeichnet, dass** die Zähne (11) pyramidenstumpfförmig ausgebildet sind.

6. Vorrichtung nach einem der Ansprüche 1 bis 5, **dadurch gekennzeichnet, dass** die Synchronisationsmittel (7, 8) derselben Prägewalze (2, 3, 15) gleichartig ausgebildet sind.

7. Vorrichtung nach einem der Ansprüche 1 bis 6, **dadurch gekennzeichnet, dass** die Synchronisationsmittel (7, 8) auf den Oberflächen der Prägewalzen (2, 3, 15) in zueinander parallelen Reihen (12, 13) angeordnet sind.

8. Vorrichtung nach einem der Ansprüche 1 bis 7, **dadurch gekennzeichnet, dass** die zumindest zwei Prägewalzen (2, 3, 15) nachgiebig gegeneinander anpressbar sind.

9. Vorrichtung nach einem der Ansprüche 1 bis 8, **dadurch gekennzeichnet, dass** sie Sensoren (24, 25) zur Erfassung einer Relativposition der Prägewalzen (2, 3, 15) zueinander aufweist.

10. Vorrichtung nach Anspruch 9, **dadurch gekennzeichnet, dass** die Sensoren (24, 25) als Drehwinkelsensoren ausgeführt sind.

11. Vorrichtung nach einem der Ansprüche 1 bis 10, **dadurch gekennzeichnet, dass** eine der Prägewalzen (2, 3, 15) von einem Motor und die zweite Prägewalze (2, 3, 15) über die auf den Mantelflächen angeordneten und ineinander greifenden Synchronisationsmittel (7, 8) antreibbar ist.

12. Vorrichtung nach einem der Ansprüche 1 bis 11, **dadurch gekennzeichnet, dass** jede Prägewalze (2, 3) von einem eigenen Motor (22, 23) angetrieben ist.

13. Vorrichtung nach Anspruch 12, **dadurch gekennzeichnet, dass** sie eine mit den Sensoren (24, 25) und den Motoren (22, 23) der Prägewalzen verbundene Steuerung (26) aufweist, welche dazu eingerichtet ist, anhand von von den Sensoren (24, 25) an sie übermittelten Daten die Drehzahl der Prägewalzen (2, 3) zum Ausgleich einer Differenz zwischen einer Sollrelativlage und einer gemessenen Relativlage zu verändern.

14. Vorrichtung nach einem der Ansprüche 1 bis 13, **dadurch gekennzeichnet, dass** sie einen Elektromotor (27) aufweist, der gleichzeitig je eine Antriebswelle (28, 29) für je eine Prägewalze (2, 3) mit der gleichen Drehzahl antreibt, wobei die Prägewalzen (2, 3) parallel zueinander angeordnet sind.

15. Vorrichtung nach Anspruch 14, **dadurch gekennzeichnet, dass** eine erste der Prägewalzen (2) über eine erste Antriebswelle (28) direkt angetrieben ist und die zweite Antriebswelle (29) über zumindest ein Kraftkopplungsglied (31) eine zur ersten Antriebswelle (28) parallele Welle (30) antreibt, auf welcher eine zweite der Prägewalzen (3) angeordnet ist.

16. Vorrichtung nach Anspruch 15, **dadurch gekennzeichnet, dass** die erste und die zweite Antriebswelle (28, 29) einstückig miteinander ausgebildet sind.

17. Vorrichtung nach einem der Ansprüche 1 bis 16, **dadurch gekennzeichnet, dass** die Vorrichtung eine auf das zu prägende Material (4) wirkende Strahlungs- und/oder Wärmequelle (32) aufweist.

18. Vorrichtung nach einem der Anspruch 1 bis 17, **dadurch gekennzeichnet, dass** die Vorrichtung eine den Prägewalzen nachgeschaltete optische Messvorrichtung zur Erfassung der Position eines mit der Präge- / Perforationsstruktur (14) erzeugten Musters auf dem zu prägenden Material aufweist.

19. Vorrichtung nach Anspruch 18, **dadurch gekennzeichnet, dass** die optische Messvorrichtung eine Bilderkennungseinheit (16) ist.

20. Vorrichtung nach Anspruch 18 oder 19, **dadurch gekennzeichnet, dass** sie dazu eingerichtet ist, eine Abweichung zwischen einer erfassten Position und einer Sollposition des erzeugten Musters auszugleichen.

21. Vorrichtung nach einem der Ansprüche 1 bis 20, **dadurch gekennzeichnet, dass** sie dazu eingerichtet ist, vor dem Prägen des Materials (4) einen Abstand (1') zwischen zumindest zwei aufeinander folgenden Aufdrucken (18) auf dem zu prägenden Material (4) zu erfassen, und bei einer Abweichung dieses Abstandes (l') von einem Sollabstand (l) die Längsausdehnung des Materials (4) entsprechend der ermittelten Abweichung (Δl) zu verändern.

22. Vorrichtung nach Anspruch 21, **dadurch gekennzeichnet, dass** sie zumindest eine den Prägewalzen (2, 3) vorgeschaltete optische Messvorrichtung zur Erfassung der Position zumindest eines auf dem zu prägende Material (4) aufgebrachten Aufdrucks (18) und zumindest eine den Prägewalzen (2, 3) vorgeschaltete auf das zu prägende Material wirkende Bremsvorrichtung (35) zur Veränderung einer Längsspannung des zu prägenden Materials (4) aufweist, wobei zumindest eine Steuerung (39) vorgesehen ist, die dazu eingerichtet ist, bei einer Abweichung (Δl) des Aufdruckes (18) von einer Sollposition, die Bremsvorrichtung (35) zu betätigen, sodass das eine Längsspannung des zu prägende Material (4) entsprechend einer von der Bremsvorrichtung (35) auf das zu prägende Material (4) ausgeübten Kraft verändert wird, wobei die von der Bremsvorrichtung auf das zu prägende Material (4) ausgeübte Kraft von der ermittelten Abweichung (Δl) abhängig ist.

23. Vorrichtung nach Anspruch 22, **dadurch gekennzeichnet, dass** die optische Messvorrichtung eine Bilderkennungseinheit (34) ist.

24. Vorrichtung nach Anspruch 23, **dadurch gekennzeichnet, dass** die Bremsvorrichtung (35) zumindest zwei Bremswalzen (36, 37) aufweist, zwischen welchen das zu prägende Material durchgeführt wird.

25. Vorrichtung nach einem der Ansprüche 22 bis 24, **dadurch gekennzeichnet, dass** ein Anpressdruck der zumindest zwei Bremswalzen (36, 37) einstellbar ist.

26. Vorrichtung nach einem der Ansprüche 22 bis 25, **dadurch gekennzeichnet, dass** die Bilderkennungseinrichtung (34) dazu eingerichtet ist, gespeicherte charakteristische Merkmale des Aufdruckes (18) oder ein Bild des Aufdruckes (18) mit einem Bild oder charakteristischen Merkmalen eines auf dem zu prägenden Material (4) aufgedruckten Aufdruckes (18) zu vergleichen.

27. Vorrichtung nach einem der Ansprüche 22 bis 26, **dadurch gekennzeichnet, dass** die Steuerung (39) dazu eingerichtet ist, einen Abstand (1') zwischen zumindest zwei aufeinander folgenden, auf das zu prägende Material (4) aufgebrachten Aufdrucken (18) zu ermitteln und zu überprüfen, ob dieser Abstand (l') mit einem Sollabstand (l) übereinstimmt.

28. Vorrichtung nach Anspruch 27, **dadurch gekennzeichnet, dass** die Steuerung (39) weiters dazu eingerichtet ist, bei Abweichung des Sollabstandes (l) von dem ermittelten Abstand (l') einen Wert der für den Ausgleich dieser Abweichung erforderlichen, auf das zu prägende Material (4) auszuübende Kraft oder ein diesem Wert proportionales Signal an die zumindest eine Bremsvorrichtung (35) zu übermitteln.

29. Vorrichtung nach einem der Ansprüche 22 bis 28, **dadurch gekennzeichnet, dass** die Vorrichtung (33) dazu eingerichtet ist, anhand der den Prägewalzen (2, 3) nachgeschalteten optischen Messvorrichtung zu überprüfen, ob eine Position des zumindest einen aufgeprägten Musters (19) in Bezug auf den zumindest einen Aufdruck (18) einer Sollposition entspricht, wobei die mit der Bremsvorrichtung (35) verbundene Steuerung (39) dazu eingerichtet ist, die von der Bremsvorrichtung (35) auf das zu prägende Material (4) ausgeübte Kraft in Abhängigkeit von dem Messergebnis der Positionsüberprüfung der den Prägewalzen (2, 3) nachgeschalteten optischen Messvorrichtung zu regeln, um eine etwaige Abweichung der Sollpositionen von Aufdruck (18) und aufgeprägtem Muster (19) zueinander auszugleichen.

30. Verfahren zum Prägen eines Mundstückbelagmaterials (41) für ein Zigarettenmundstück, **dadurch gekennzeichnet, dass** zum Prägen des Mundstückbelagmaterials (41) eine Vorrichtung gemäß den Ansprüchen 1 bis 29 verwendet wird.

31. Verfahren nach Anspruch 30, **dadurch gekennzeichnet, dass** als Mundstückbelagmaterial (41) Papier verwendet wird.

32. Verfahren nach Anspruch 31, **dadurch gekennzeichnet, dass** als Mundstückbelagmaterial eine Folie, insbesondere eine Heißprägefolie oder ein mit einer Heißprägefolie beschichtetes Material, verwendet wird.

33. Verfahren nach Anspruch 32, **dadurch gekennzeichnet, dass** die Folie oder das mit einer Heißprägefolie beschichtete Material vor dem Prägen erhitzt wird.

34. Verfahren nach einem der Ansprüche 30 bis 33, **dadurch gekennzeichnet, dass** vor dem Prägen des Materials (4) ein Abstand (l') zwischen zumindest zwei aufeinander folgenden Aufdrucken (18) auf dem zu prägenden Material (4) erfasst und bei einer Abweichung (Δl) dieses Abstandes (l') von einem Sollabstand (l) die Längsausdehnung des Materials (4) entsprechend der ermittelten Abweichung (Δl) verändert wird.

35. Verfahren nach Anspruch 34, **dadurch gekennzeichnet, dass** mit zumindest einer den Prägewalzen (2, 3) vorgeschalteten optischen Messvorrichtung die Position zumindest eines auf dem zu prägenden Mundstückbelagmaterial (41) aufgebrachten Aufdrucks (18) erfasst wird und mit zumindest einer den Prägewalzen (2, 3) vorgeschalteten auf das zu prägende Mundstückbelagmaterial (4) wirkende Bremsvorrichtung (35) eine Längsspannung des zu prägenden Mundstückbelagmaterials (41) verändert wird, wobei zumindest eine Steuerung (39) vorgesehen ist, die bei einer Abweichung (Δl) des Aufdruckes von einer Sollposition die Bremsvorrichtung (35) betätigt, sodass die Längsspannung des zu prägenden Mundstückbelagmaterials entsprechend einer von der Bremsvorrichtung (35) auf das Mundstückbelagsmaterial ausgeübten Kraft verändert wird, wobei die von der Bremsvorrichtung (35) auf das zu prägende Mundstückbelagmaterial (41) ausgeübte Kraft von der ermittelten Abweichung (Δl) abhängig ist.

36. Verfahren nach Ansprüche 34 oder 35, **dadurch gekennzeichnet, dass** das zu prägende Mundstückbelagmaterial (41) vorgespannt wird.

37. Verfahren nach Anspruch 35 oder 36, **dadurch gekennzeichnet, dass** als optische Messvorrichtung eine Bilderkennungseinheit (34) verwendet wird und gespeicherte charakteristischen Merkmale des Aufdruckes (18) oder ein gespeichertes Bild des Aufdruckes (18) mit einem aufgenommenen Bild oder charakteristischen Merkmalen eines auf dem zu prägenden Mundstückbelagmaterial (41) aufgedruckten Aufdruckes (18) verglichen werden.

38. Verfahren nach einem der Ansprüche 35 bis 37, **dadurch gekennzeichnet, dass** mittels der Steuerung (39) der Abstand (l') zwischen zumindest zwei aufeinander folgenden auf das zu prägende Mundstückbelagmaterial (41) aufgebrachten Aufdrucken ermittelt und überprüft wird, ob dieser Abstand (l') mit einem Sollabstand (l) übereinstimmt.

39. Verfahren nach Anspruch 38, **dadurch gekennzeichnet, dass** bei Abweichung (Δl) des Sollabstandes (l) von dem ermittelten Abstand (l') die für den Ausgleich dieser Abweichung (Δl) erforderliche, auf das zu prägende Mundstückbelagmaterial (41) mittels der Bremsvorrichtung (35) auszuübende Kraft von der Steuerung (39) eingestellt wird.

40. Verfahren nach einem der Ansprüche 35 bis 39, **dadurch gekennzeichnet, dass** anhand der den Prägewalzen (2, 3) nachgeschalteten optischen Messvorrichtung überprüft wird, ob eine Position des zumindest einen aufgeprägten Musters (19) in Bezug auf den zumindest einen Aufdruck (18) einer Sollposition entspricht, wobei die von der Bremsvorrichtung (35) auf das zu prägende Mundstückbelagmaterial (41) ausgeübte Kraft in Abhängigkeit von dem Ergebnis der Positionsüberprüfung der den Prägewalzen (2, 3) nachgeschalteten Bilderkennungseinheit (16) geregelt wird, um eine etwaige Abweichung (Δl) der Sollposition von Aufdruck (18) und aufgeprägtem Muster (19) zueinander auszugleichen.

41. Prägewalze für eine Vorrichtung nach einem der Ansprüche 1 bis 29, wobei die Prägewalze erhabene, insbesondere pyramidenstumpförmige, Stellen gebildete Prägestrukturen aufweist, die an zumindest einem ersten und zumindest einem zweiten radial umlaufenden Oberflächenabschnitt (9, 10) angeordnet sind, **dadurch gekennzeichnet, dass** die Prägestrukturen (14) des zumindest einem ersten und des zumindest einem zweiten radial umlaufenden Oberflächenabschnittes (9, 10) der Prägewalze (15, 36) seitlich und in radial umlaufender Richtung versetzt zueinander angeordnet sind.

## Claims

1. Device (1, 33) for embossing a predeterminable pattern onto at least one flat material (4) introduced between two embossing rollers of the device, and the movements of the embodding rollers are synchronized with one another, and the embossing rollers (2, 3) moreover have at least two embossing tracks (5, 6), **characterized in that** the movements of the embossing rollers (2, 3) are synchronized with one another by means of synchonization means (7, 8) which engage with one another and are distributed over casing surfaces of the embossing rollers (2, 3) and are associated to different embossing tracks (5, 6) and form perforation structures (14), and the various embossing tracks (5, 6) of the associated synchronization means (7, 8) of the same embossing roller (2, 3) are arranged to be offset in relation to one another.

2. Device according to claim 1, **characterized in that** the synchronization means (7, 8) of the at least two embossing rollers (2, 3, 15) are raised points distributed over the casing surfaces of the embossing rollers (2, 3, 15), and the casing surfaces of the embossing rollers (2, 3, 15) are designed to be congruent with one another in the region of the synchronization means (7, 8) and the raised points of at least one first radially circumferential surface section (9) are arranged to be offset relative to the raised points of at least one second surface section (10) of the same embossing roller (2, 3, 15).

3. Device according to claim 2, **characterized in that** the raised points of the first surface section (9) and the second surface section (10) are arranged in respective rows (12, 13), the rows (12) of the first surface section (9) are offset relative to the rows (13) of the second surface section (10), and one row (13) of the second surface section (10) is in each case situated between two rows (12) of the first surface section (9) as seen in the line of vision of a direction parallel to the longitudinal axis (a) of the embossing roller (2,3, 15).

4. Device according to one of claims 2 or 3, **characterized in that** the raised points are provided in the form of teeth (11).

5. Device according to claim 4, **characterized in that** the teeth (11) are embodied do be truncated pyramids.

6. Device according to one of claims 1 to 5, **characterized in that** the synchronization means (7, 8) of the same embossing roller (2, 3, 15) are designed to be of the same type.

7. Device according to one of claims 1 to 6, **characterized in that** the synchronization means (7, 8) are arranged on the surfaces of the embossing rollers (2, 3, 15) in parallel rows (12, 13)

8. Device according to one of claims 1 to 7, **characterized in that** the at least two embossing rollers (2, 3, 15) can be pressed against one another flexibly.

9. Device according to one of claims 1 to 8, **characterized in that** wherein it comprises sensors (24, 25) for detecting the relative position of the embossing rollers (2, 3, 15) to one another.

10. Device according to claim 9, **characterized in that** the sensors (24, 25) are configured as rotary angle sensors.

11. Device according to one of claims 1 to 10, **characterized in that** one of the embossing rollers (2, 3, 15) can be driven by a motor and the second embossing roller (2, 3, 15) can be driven by the synchronization means (7, 8) arranged on the casing surfaces and engaging with one another.

12. Device according to one of claims 1 to 11, **characterized in that** each embossing roller (2, 3) is driven by its own motor (22, 23).

13. Device according to claim 12, **characterized in that** it comprises a control (26) connected to the sensors (24, 25) and the motors (22, 23) of the embossing rollers, which is set up to change the speed of the embossing rollers (2, 3) to compensate a difference between a reference relative position and a measured relative position with reference to data sent thereto by the sensors (24, 25).

14. Device according to one of claims 1 to 13, **characterized in that** it comprises an electric motor (27), which at the same time drives one drive shaft (28, 29) for one embossing roller (2, 3) at the same speed, the embossing rollers (2, 3) being arranged parallel to one another.

15. Device according to claim 14, **characterized in that** a first of the embossing rollers (2) is driven directly by a first drive shaft (28) and the second drive shaft (29) by means of at least one force coupling member (31) drives a shaft (30) parallel to the first drive shaft (28), on which a second of the embossing rollers (3) is arranged.

16. Device according to claim 15, **characterized in that** the first and the second drive shaft (28, 29) are configured to be in one piece with one another.

17. Device according to one of claims 1 to 6, **characterized in that** the device comprises a radiation and/or heat source (32) acting on the material (4) to be embossed.

18. Device according to one of claims 1 to 17, **characterized in that** the device comprises an optical measuring device connected downstream of the embossing rollers for determining the position of a pattern produced by the embossing/perforation structure (14) on the material to be embossed.

19. Device according to claim 18, **characterized in that** the optical measuring device is an image recognition unit (16).

20. Device according to claim 18 or 19, **characterized in that** it is set up to compensate a deviation between a determined position and a reference position of the pattern produced.

21. Device according to one of claims 1 to 20, **characterized in that** it is set up to determine prior to the embossing of the material (4) the distance (1') between at least two consecutive imprints (18) on the material (4) to be embossed, and in the case of a deviation of this distance (l') from a reference distance (l) to change the longitudinal extension of the material (4) according to the determined deviation (Δl).

22. Device according to claim 21, **characterized in that** it comprises at least one optical measuring device connected upstream of the embossing rollers (2, 3) for detecting the position of at least one imprint (18) applied onto the material (4) to be embossed and at least one braking device (35) connected upstream of the embossing rollers (2, 3) and acting on the material to be embossed for changing the longitudinal tension of the material (4) to be embossed, and at least one control (39) is provided which is set up to activate the braking device (36) in the case of a deviation (Δl) of the imprint (18) from a reference position, so that the longitudinal tension of the material (4) to be embossed is changed according to a force exerted by the braking device (35) on the material (4) to be embossed, wherein the force exerted by the braking device on the material (4) to be embossed is dependent on the determined deviation (Δl).

23. Device according to claim 22, **characterized in that** the optical measuring device is an image recognition unit (34).

24. Device according to claim 23, **characterized in that** the braking device (35) comprises at least two braking rollers (36, 37), between which the material to be embossed is guided.

25. Device according to one of claims 22 to 24, **characterized in that** a surface pressure of the at least two braking rollers (36, 37) can be adjusted.

26. Device according to one of claims 22 to 25, **characterized in that** the image recognition device (34) is set up to compare saved characteristic features of the imprint (18) or an image of the imprint (18) with an image or characteristic features of an imprint (18) printed on the material (4) to be embossed.

27. Device according to one of claims 22 to 26, **characterized in that** the control (39) is set up to determine a distance (1') between at least two consecutive imprints (18) applied onto the material (4) to be embossed and to check whether this distance (1') corresponds with a reference distance (1).

28. Device according to claim 27, **characterized in that** the control (39) is also set up to transmit to the at least one braking device (35) a value of the force required to compensate the deviation and to be exerted on the material (4) to be embossed or a signal proportional to this value in the case of a deviation of the reference distance (1) from the determined distance (1').

29. Device according to one of claims 22 to 28, **characterized in that** the device (33) is set up to check on the basis of the optical measuring device arranged downstream of the embossing rollers (2, 3), whether a position of the at least one embossed pattern (19) relative to the at least one imprint (18) corresponds to a reference position, wherein the control (39) connected to the braking device (35) is set up to control the force exerted by the braking device (35) on the material (4) to be embossed as a function of the measurement result of the position check of the optical measuring device connected downstream of the embossing rollers (2, 3), in order to compensate for any deviation of the reference position of the imprint (18) and embossed pattern (19) from one another.

30. Method for embossing a tip cover material (41) for a cigarette tip, **characterized in that** to emboss the tip cover material (41) a device according to claims 1 to 29 is used.

31. Method according to claim 30, **characterized in that** paper is used as the tip cover material (41).

32. Method according to claim 31, **characterized in that** a foil is used as the tip cover material, in particular a heat embossing foil or a material coated with a heat embossing foil.

33. Method according to claim 32, **characterized in that** the foil or the material coated with a heat embossing foil is heated prior to embossing.

34. Method according to one of claims 30 to 33, **characterized in that** prior to embossing the material (4) the distance (1') between at least two consecutive imprints (18) on the material (4) to be embossed is determined and if there is a deviation (Δl) of this distance (1') from a reference distance (1) the longitudinal extension of the material (4) is changed according to the determined deviation (Δl).

35. Method according to claim 34, **characterized in that** by means of at least one optical measuring device arranged upstream of the embossing rollers (2, 3) the position of at least one imprint (18) applied onto the tip cover material (41) to be embossed is determined and by means of at least one braking device (35) arranged upstream of the embossing rollers (2, 3) and acting on the tip cover material (4) to be embossed the longitudinal tension of the tip cover material (41) to be embossed is changed, wherein at least one control (39) is provided, which when there is a deviation (Δl) of the imprint from a reference position activates the braking device (35), so that the longitudinal tension of the tip cover material to be embossed is changed according to a force exerted by the braking device (35) on the tip cover material, wherein the force exerted by the braking device (35) on the tip cover material (41) to be embossed is dependent on the determined deviation (Δl).

36. Method according to one of claims 34 or 35, **characterized in that** the tip cover material (41) to be embossed is pretensioned.

37. Method according to claim 35 or 36, **characterized in that** an image recognition unit (34) is used as the optical measuring device and saved characteristic features of the imprint (18) or a saved image of the imprint (18) are compared with a recorded image or characteristic features of an imprint (18) printed on the tip cover material (41) to be embossed.

38. Method according to one of claims 35 to 37, **characterized in that** by means of the control (39) the distance (1') between at least two imprints applied consecutively onto the tip cover material (41) to be embossed is determined and it is checked to see whether this distance (1') corresponds with a reference distance (1).

39. Method according to claim 38, **characterized in that** if there is a deviation (Δl) between the reference distance (1) and the determined distance (1') the force required to compensate this deviation (Δl) and to be exerted by the braking device (35) on the tip cover material (41) to be embossed is adjusted by the control (39).

40. Method according to one of claims 35 to 39, **characterized in that** by means of the optical measuring device connected downstream of the embossing rollers (2, 3) it is checked whether a position of the at least one embossed pattern (19) in relation to the at least one imprint (18) corresponds to a reference position, wherein the force exerted by the braking device (35) on the tip cover material (41) to be embossed is controlled as a function of the result of the position check of the image recognition unit (16) connected downstream of the embossing rollers (2, 3), in order to compensate any deviation (Δl) of the reference position of the imprint (18) and embossed pattern (19) from one another.

41. Embossing roller for a device as according to one of claims 1 to 29, wherein the embossing roller comprises embossed structures formed by raised, in particular truncated pyramid-like points, which are arranged on at least one first and at least one second radially circumferential surface section (9, 10), **characterized in that** the embossing structures (14) of the at least one first and the at least one second radially circumferential surface section (9, 10) of the embossing roller (15, 36) are arranged to be offset to one another laterally and in radial circumferential direction.

## Revendications

1. Dispositif (1, 33) pour le gaufrage d'un motif prédéfinissable dans au moins un matériau (4) plat guidé entre au moins deux cylindres de gaufrage du dispositif, les mouvements des cylindres de gaufrage étant synchronisés les uns avec les autres, et les cylindres de gaufrage (2, 3) comportant, en outre, au moins deux sillons de gaufrage (5, 6), **caractérisé en ce que** les mouvements des cylindres de gaufrage (2, 3) sont synchronisés les uns avec les autres par des moyens de synchronisation (7, 8), qui engrènent les uns dans les autres, sont répartis sur des parois latérales des cylindres de gaufrage (2, 3) et associées aux différents sillons de gaufrage (5, 6) et forment des structures de gaufrage (14), les moyens de synchronisation (7, 8) du même cylindre de gaufrage (2, 3), associés aux différents sillons de gaufrage étant disposés de manière décalée les uns par rapport aux autres.

2. Dispositif selon la revendication 1, **caractérisé en ce que** les moyens de synchronisation (7, 8) desdits au moins deux cylindres de gaufrage (2, 3, 15) sont des zones en relief réparties sur les parois latérales des cylindres de gaufrage (2, 3, 15), les parois latérales des cylindres de gaufrage (2, 3, 15) étant réalisées sous forme congruente l'une par rapport à l'autre dans la zone des moyens de synchronisation (7, 8), et les zones en relief d'au moins une première partie de surface (9) radialement périphérique étant décalées par rapport aux zones en relief d'au moins une deuxième partie de surface (10) du même cylindre de gaufrage (2, 3, 15).

3. Dispositif selon la revendication 2, **caractérisé en ce que** les zones en relief de la première partie de surface (9) et de la deuxième partie de surface (10) sont disposées respectivement en rangées (12, 13), les rangées (12) de la première partie de surface (9) sont décalées par rapport aux rangées (13) de la deuxième partie de surface (10), respectivement une rangée (13) de la deuxième partie de surface (10) venant se situer entre deux rangées (12) de la première partie de surface (9) dans le cas d'une observation dans une direction parallèle à l'axe longitudinal (a) des cylindres de gaufrage (2, 3, 15).

4. Dispositif selon la revendication 2 ou 3, **caractérisé en ce que** les zones en relief sont réalisées sous forme de dents (11).

5. Dispositif selon la revendication 4, **caractérisé en ce que** les dents (11) sont réalisées sous forme de pyramides tronquées.

6. Dispositif selon l'une quelconque des revendications 1 à 5, **caractérisé en ce que** les moyens de synchronisation (7, 8) du même cylindre de gaufrage (2, 3, 15) sont réalisés de manière similaire.

7. Dispositif selon l'une quelconque des revendications 1 à 6, **caractérisé en ce que** les moyens de synchronisation (7, 8) sont disposés sur les surfaces des cylindres de gaufrage (2, 3, 15) en rangées (12, 13) parallèles entre elles.

8. Dispositif selon l'une quelconque des revendications 1 à 7, **caractérisé en ce que** lesdits au moins deux cylindres de gaufrage (2, 3, 15) peuvent être pressés l'un contre l'autre de manière flexible.

9. Dispositif selon l'une quelconque des revendications 1 à 8, **caractérisé en ce qu'**il comporte des capteurs (24, 25) pour détecter une position relative des cylindres de gaufrage (2, 3, 15) les uns par rapport aux autres.

10. Dispositif selon la revendication 9, **caractérisé en ce que** les capteurs (24, 25) sont réalisés sous forme de capteurs d'angle de rotation.

11. Dispositif selon l'une quelconque des revendications 1 à 10, **caractérisé en ce que** l'un des cylindres de gaufrage (2, 3, 15) peut être actionné par un moteur et le deuxième cylindre de gaufrage (2, 3, 15) peut être actionné par les moyens de synchronisation (7, 8) disposés sur les parois latérales et engrenant les uns dans les autres.

12. Dispositif selon l'une quelconque des revendications 1 à 11, **caractérisé en ce que** chaque cylindre de gaufrage (2, 3) est actionné par son propre moteur (22, 23).

13. Dispositif selon la revendication 12, **caractérisé en ce qu'**il comporte une commande (26), qui est reliée aux capteurs (24, 25) et aux moteurs (22, 23) des cylindres de gaufrage et qui est configurée pour modifier, à l'appui des données qui lui ont été transmises par les capteurs (24, 25), la vitesse de rotation des cylindres de gaufrage (2, 3) afin de compenser une différence entre une position relative de consigne et une position relative mesurée.

14. Dispositif selon l'une quelconque des revendications 1 à 13, **caractérisé en ce qu'**il comporte un moteur électrique (27) qui actionne avec la même vitesse de rotation simultanément un arbre d'entraînement (28, 29) pour chacun des cylindres de gaufrage (2, 3), les cylindres de gaufrage (2, 3) étant disposés parallèlement entre eux.

15. Dispositif selon la revendication 14, **caractérisé en ce qu'**un premier cylindre de gaufrage (2) est actionné directement par un premier arbre d'entraînement (28), et le deuxième arbre d'entraînement (29) actionne, par l'intermédiaire d'un organe de couplage par force (31), un arbre (30) qui est parallèle au premier arbre d'entraînement (28) et sur lequel est disposé le deuxième cylindre de gaufrage (3).

16. Dispositif selon la revendication 15, **caractérisé en ce que** le premier et le deuxième arbre d'entraînement (28, 29) sont réalisés d'un seul tenant l'un avec l'autre.

17. Dispositif selon l'une quelconque des revendications 1 à 16, **caractérisé en ce que** le dispositif comporte une source de rayonnement et/ou de chaleur (32) agissant sur le matériau (4) à gaufrer.

18. Dispositif selon l'une quelconque des revendications 1 à 17, **caractérisé en ce que** le dispositif comporte un dispositif de mesure optique, monté en aval des cylindres de gaufrage et destiné à enregistrer la position d'un modèle généré avec la structure de gaufrage / perforation (14) sur le matériau à gaufrer.

19. Dispositif selon la revendication 18, **caractérisé en ce que** le dispositif de mesure optique est une unité de reconnaissance d'image (16).

20. Dispositif selon la revendication 18 ou 19, **caractérisé en ce qu'**il est configuré pour compenser une divergence entre une position détectée et une position de consigne du modèle généré.

21. Dispositif selon l'une quelconque des revendications 1 à 20, **caractérisé en ce qu'**il est configuré pour détecter, avant le gaufrage du matériau (4), une distance (1') entre au moins deux impressions (18) consécutives sur le matériau (4) à gaufrer, et, en cas de divergence entre cette distance (1') et une distance de consigne (1), pour modifier la dilatation longitudinale du matériau (4) conformément à la divergence (Δl) déterminée.

22. Dispositif selon la revendication 21, **caractérisé en ce qu'**il comporte au moins un dispositif de mesure optique, monté en amont des cylindres de gaufrage (2, 3), pour détecter la position d'au moins une impression (18) appliquée sur le matériau (4) à gaufrer, et au moins un dispositif de freinage (35), monté en amont des cylindres de gaufrage (2, 3) et agissant sur le matériau à gaufrer, pour modifier une tension longitudinale du matériau (4) à gaufrer, au moins une commande (39) étant prévue, laquelle est configurée pour actionner, en présence d'une divergence (Δl) de l'impression (18) par rapport à la position de consigne, le dispositif de freinage (35) de telle sorte qu'une tension longitudinale du matériau (4) à gaufrer est modifiée conformément à une force exercée par le dispositif de freinage (35) sur le matériau (4) à gaufrer, ladite force exercée par le dispositif de freinage sur le matériau (4) à gaufrer étant fonction de la divergence (Δl) déterminée.

23. Dispositif selon la revendication 22, **caractérisé en ce que** le dispositif de mesure optique est une unité de reconnaissance d'image (34).

24. Dispositif selon la revendication 23, **caractérisé en ce que** le dispositif de freinage (35) comporte au moins deux cylindres de frein (36, 37), entre lesquels défile le matériau à gaufrer.

25. Dispositif selon l'une quelconque des revendications 22 à 24, **caractérisé en ce que** la pression d'appui desdits au moins deux cylindres de frein (36, 37) est réglable.

26. Dispositif selon l'une quelconque des revendications 22 à 25, **caractérisé en ce que** l'unité de reconnaissance d'image (34) est configurée pour comparer des attributs caractéristiques mémorisés de l'impression (18) ou une image de l'impression (18) à une image ou à des attributs caractéristiques d'une impression (18) appliquée sur le matériau (4) à gaufrer.

27. Dispositif selon l'une quelconque des revendications 22 à 26, **caractérisé en ce que** la commande (39) est configurée pour déterminer une distance (1') entre au moins deux impressions (18) consécutives appliquées sur le matériau (4) à gaufrer et pour vérifier si cette distance (1') correspond à une distance de consigne (1).

28. Dispositif selon la revendication 27, **caractérisé en ce que** la commande (39) est configurée, en outre, pour transmettre audit au moins un dispositif de freinage (35), en présence d'une divergence entre la distance de consigne (1) et la distance (1') déterminée, une valeur de la force requise pour compenser cette divergence et à exercer sur le matériau (4) à gaufrer ou un signal proportionnel à cette valeur.

29. Dispositif selon l'une quelconque des revendications 22 à 28, **caractérisé en ce que** le dispositif (33) est configuré pour vérifier, au moyen du dispositif de mesure optique monté en aval des cylindres de gaufrage (2, 3), si une position dudit au moins un modèle (19) gravé par rapport à ladite au moins une impression (18) correspond à une position de consigne, la commande (39) reliée au dispositif de freinage (35) étant configurée pour régler la force exercée par le dispositif de freinage (35) sur le matériau (4) à gaufrer en fonction du résultat du contrôle de la position par le dispositif de mesure optique monté en aval des cylindres de gaufrage (2, 3), afin de compenser une éventuelle divergence entre la position de consigne de l'impression (18) et le modèle (19) gravé.

30. Procédé permettant de gaufrer un matériau de revêtement (41) pour un bout de cigarette, **caractérisé en ce que** pour gaufrer le matériau de revêtement du bout de cigarette (41), on utilise un dispositif selon l'une des revendications 1 à 29.

31. Procédé selon la revendication 30, **caractérisé en ce que** l'on utilise du papier comme matériau de revêtement du bout de cigarette (41).

32. Procédé selon la revendication 31, **caractérisé en ce que** le matériau de revêtement du bout de cigarette utilisé est un film, en particulier un film pour gaufrage à chaud ou un matériau revêtu d'un film pour gaufrage à chaud.

33. Procédé selon la revendication 32, **caractérisé en ce que** le film ou le matériau revêtu d'un film pour gaufrage à chaud sont chauffés avant le gaufrage.

34. Procédé selon l'une quelconque des revendications 30 à 33, **caractérisé en ce qu'**avant le gaufrage du matériau (4) est détectée une distance (1') entre au moins deux impressions (18) consécutives sur le matériau (4) à gaufrer, et, en cas de divergence (Δl) entre cette distance (1') et une distance de consigne (1), la dilatation longitudinale du matériau (4) est modifiée conformément à la divergence (Δl) déterminée.

35. Procédé selon la revendication 34, **caractérisé en ce qu'**avec au moins un dispositif de mesure optique, monté en amont des cylindres de gaufrage (2, 3), est détectée la position d'au moins une impression (18) appliquée sur le matériau de revêtement du bout de cigarette (41) à gaufrer, et avec au moins un dispositif de freinage (35), monté en amont des cylindres de gaufrage (2, 3) et agissant sur le matériau de revêtement du bout de cigarette (4) à gaufrer, une tension longitudinale du matériau de revêtement du bout de cigarette (41) à gaufrer est modifiée, au moins une commande (39) étant prévue, laquelle, en présence d'une divergence (Δl) de l'impression par rapport à une position de consigne, actionne le dispositif de freinage (35) de telle sorte que la tension longitudinale du matériau de revêtement du bout de cigarette à gaufrer est modifiée conformément à une force exercée par le dispositif de freinage (35) sur le matériau de revêtement du bout de cigarette, la force exercée par le dispositif de freinage (35) sur le matériau de revêtement du bout de cigarette (41) à gaufrer étant fonction de la divergence (Δl) déterminée.

36. Procédé selon la revendication 34 ou 35, **caractérisé en ce que** le matériau de revêtement (41) gaufrer est précontraint.

37. Procédé selon la revendication 35 ou 36, **caractérisé en ce que** le dispositif de mesure optique utilisé est une unité de reconnaissance d'image (34), et des attributs caractéristiques mémorisés de l'impression (18) ou une image mémorisée de l'impression (18) sont comparés à une image enregistrée ou à des attributs caractéristiques enregistrés d'une impression (18) appliquée sur le matériau de revêtement du bout de cigarette (41) à gaufrer.

38. Procédé selon l'une quelconque des revendications 35 à 37, **caractérisé en ce qu'**au moyen de la commande (39) est déterminée la distance (1') entre au moins deux impressions consécutives appliquées sur le matériau de revêtement du bout de cigarette (41) à gaufrer et il est vérifié si cette distance (1') correspond à une distance de consigne (1).

39. Procédé selon la revendication 38, **caractérisé en ce qu'**en cas de divergence (Δl) entre la distance de consigne (1) et la distance (1') déterminée, la force requise pour compenser cette divergence (Δl) et exercée par le dispositif de freinage (35) sur le matériau de revêtement du bout de cigarette (41) à gaufrer est réglée par la commande (39).

40. Procédé selon l'une quelconque des revendications 35 à 39, **caractérisé en ce qu'**au moyen du dispositif de mesure optique monté en aval des cylindres de gaufrage (2, 3), il est vérifié si une position dudit au moins un modèle (19) gravé par rapport à ladite au moins une impression (18) correspond à une position de consigne, la force exercée par le dispositif de freinage (35) sur le matériau de revêtement du bout de cigarette (41) à gaufrer étant réglée en fonction du résultat du contrôle de la position par l'unité de reconnaissance d'image (16) montée en aval des cylindres de gaufrage (2, 3), afin de compenser une éventuelle divergence (Δl) entre la position de consigne de l'impression (18) et le modèle (19) gravé.

41. Cylindre de gaufrage pour un dispositif selon l'une des revendications 1 à 29, ledit cylindre de gaufrage comportant des structures de gaufrage formées par des zones en relief, en particulier sous forme de pyramides tronquées, lesquelles sont disposées sur au moins une première partie de surface (9) et au moins une deuxième partie de surface (10) radialement périphérique, **caractérisé en ce que** les structures de gaufrage (14) de ladite au moins une partie de surface (9) et de ladite au moins une deuxième partie de surface (10) radialement périphérique des cylindres de gaufrage (15, 36) sont disposées latéralement et sont décalées les unes par rapport aux autres dans le sens radialement périphérique.
